# EUROPÄISCHE PATENTSCHRIFT

(11) **EP 0 696 875 B1**
(45) Veröffentlichungstag und Bekanntmachung des Hinweises auf die Patenterteilung: **14.11.2001**
(21) Anmeldenummer: 95111811.6
(22) Anmeldetag: 27.07.1995
(51) Int. Cl.: H04N 9/31

(54) **Vorrichtung zur Erzeugung eines Bildes**
Device for producing an image
Dispositif pour produire une image

(30) Priorität: 09.08.1994 DE 4428202
(43) Veröffentlichungstag der Anmeldung: 14.02.1996
(73) Patentinhaber: Deutsches Zentrum für Luft- und Raumfahrt e.V., 53175 Bonn (DE)
(72) Erfinder: Opower, Hans, Prof. Dr. rer. nat., D-82152 Krailling (DE); Becker, Uwe, Dr. rer. nat., D-70499 Stuttgart (DE); Brauch, Uwe, Dr. rer. nat., D-70565 Stuttgart (DE)
(74) Vertreter: Hoeger, Stellrecht & Partner

(56) Entgegenhaltungen:
- EP-A- 0 458 270
- WO-A-94/18802
- FR-A- 2 577 371
- GB-A- 2 252 472
- US-A- 4 297 723
- US-A- 4 805 012

## Beschreibung

Die Erfindung betrifft eine Vorrichtung zur Erzeugung eines insbesondere für ein menschliches Auge sichtbaren Bildes in einer Bildfläche, umfassend eine Strahlungsquelle, welche über eine Projektionsoptik ein Bild dadurch erzeugt, daß sie während eines Bildaufbauzyklus mindestens eine Bildreihe durch Ausleuchten einzelner nebeneinanderliegender Bildflecken aufbaut und den Bildaufbauzyklus periodisch wiederholt, wobei zur Ausleuchtung der Bildflecken der Bildreihe eine eine Vielzahl von Halbleiteremittern umfassende Leuchtreihe vorgesehen ist, die Projektionsoptik jeden Austrittsfleck für die Strahlung jedes Halbleiteremitters mindestens einem der Bildflecken zuordnet, und wobei die Projektionsoptik die Austrittsflecken aller Halbleiteremitter der Leuchtreihe gleichzeitig auf die diesen zugeordneten Bildflecken abbildet.

Die erfindungsgemäßen Vorrichtungen dienen beispielsweise dazu, nicht nur statische sondern auch bewegte Bilder, wie beispielsweise Fernsehbilder, in Großformat und gegebenenfalls auch mehrfarbig zu erzeugen.

Eine derartige Vorrichtung ist beispielsweise aus der FR-A-2 577 371 bekannt, wobei bei dieser Art von Vorrichtungen die Bilderzeugung mit einer optischen Quelle für jede Farbe erfolgt, deren Strahlung durch eine Vielzahl von Modulatoren modulierbar ist und anschließend mittels einer Projektionsoptik auf die Bildfläche durch Ausleuchten einer Reihe von Bildflecken abgebildet wird und dabei mittels der Projektionsoptik zur Erzeugung eines für das menschliche Auge als Ganzes erkennbaren Bildes aus einzelnen Bildpunkten bewegt wird.

Aus der EP-A-0 458 270 ist eine Vorrichtung zur Erzeugung eines Bildes bekannt, bei welcher mittels Licht aus einer Reihe von lichtemittierenden Elementen und mittels einer Projektionsoptik ein Zwischenbild erzeugt wird, das dann seinerseits auf die mit dem menschlichen Auge erfaßbare Bildfläche abgebildet wird.

Ferner ist aus der nur als neuheitsschädlicher Stand der Technik relevanten WO 94/18802 eine Vorrichtung zur Erzeugung eines Bildes bekannt, bei welcher ein Halbleiteremitter als Strahlungsquelle mit einer Projektionsoptik Sätze nebeneinander liegender Bildflecken erzeugt, die dann von der Projektionsoptik jeweils um einen ganzen Satz versetzt werden.

Der Erfindung liegt daher die Aufgabe zugrunde, eine Vorrichtung der gattungsgemäßen Art derart zu verbessern, daß die Bilderzeugung möglichst einfach und daher auch kostengünstig möglich ist.

Diese Aufgabe wird bei einer Vorrichtung der eingangs beschriebenen Art erfindungsgemäß dadurch gelöst, daß die Projektionsoptik nebeneinander liegende Austrittsflecken der Leuchtreihe auf eine als Bildfleckenraster ausgebildete Bildfleckenserie mit einem Bildfleckenrasterabstand abbildet, der jeweils ein bestimmtes Vielfaches des Abstandes nebeneinander liegender Bildflecken der Bildreihe beträgt.

Der Vorteil der erfindungsgemäßen Lösung ist darin zu sehen, daß einerseits die Halbleiteremitter eine einfach aufgebaute und zu betreibende Strahlungsquelle darstellen, und daß andererseits die vorgesehene Vielzahl von Halbleiteremittern der Leuchtreihe die Projektionsoptik insoweit vereinfacht, als diese alle Halbleiteremitter der Leuchtreihe gleichzeitig auf die diesen zugeordneten Bildflecken abbilden kann, so daß, ausgehend von beispielsweise 100 Bildaufbauzyklen pro Sekunde, an die Projektionsoptik geringere Anforderungen gestellt werden.

Als besonders vorteilhaft erweist sich diese Lösung, wenn man davon ausgeht, daß das Bild, um als Ganzes für das menschliche Auge sichtbar zu sein, mindestens in dem bei Fernsehgeräten üblichen Zeitraum aufgebaut sein muß und sich mindestens mit bei Fernsehgeräten üblichen Wiederholfrequenzen wiederholen muß.

Dabei besteht die Möglichkeit, beispielsweise die Vielzahl der Halbleiteremitter so zu wählen, daß zu einem Zeitpunkt die Projektionsoptik einen Teil der Bildflecken einer Bildreihe ausleuchtet und zu einem späteren Zeitpunkt einen anderen Teil.

Eine Reihe im Sinne der Erfindung kann horizontal oder vertikal verlaufen.

Dabei ist es besonders günstig, daß die Projektionsoptik nebeneinander liegende Austrittsflecken der Leuchtreihe auf eine als Bildfleckenraster ausgebildete Bildfleckenserie mit einem Bildfleckenrasterabstand abbildet, der jeweils ein bestimmtes Vielfaches des Abstandes nebeneinander liegender Bildflecken des Bildes beträgt.

Vorzugsweise ist dies ein ganzzahliges Vielfaches des Abstandes nebeneinanderliegender Bildflecken des Bildes.

Um hierzu die Strahlung nebeneinanderliegender Halbleiteremitter auf einen Abstand zu bringen, welcher nach Abbildung durch die Projektionsoptik dem Bildfleckenrasterabstand in der Bildreihe entspricht, ist vorteilhafterweise vorgesehen, daß die Vorrichtung eine Spreizoptik umfaßt, welche den Abstand zwischen nebeneinander liegenden Austrittsflecken der Leuchtreihe auf einen Rasterabstand abbildet, der nach Abbildung durch die Projektionsoptik in dem Bild den Bildfleckenrasterabstand ergibt.

Diese Spreizoptik kann in unterschiedlichster Art und Weise ausgebildet sein.

Vorzugsweise ist vorgesehen, daß die Spreizoptik den Abstand zwischen nebeneinanderliegenden Austrittsflecken der Leuchtreihe auf den Rasterabstand vergrößert.

Hierzu ist vorzugsweise vorgesehen, daß die Spreizoptik die aus den Austrittsflecken austretenden Strahlenbündel auf parallele im Rasterabstand zueinander verlaufende Strahlenbündel abbildet.

Die Spreizoptik kann selbst aus unterschiedlichsten Elementen aufgebaut sein. So sieht ein vorteilhaftes Ausführungsbeispiel vor, daß die Spreizoptik mehrere Prismenelemente umfaßt, in welche die aus der Leuchtreihe kommende Strahlung der einzelnen Halbleiteremitter eintritt, und daß die Prismenelemente aus der Spreizoptik austretende Strahlenbündel erzeugen, welche den Rasterabstand voneinander aufweisen.

Alternativ zum Vorsehen von Prismenelementen ist vorgesehen, daß die Spreizoptik ein Reflexionsgitter umfaßt, dessen Reflexionsflächen in Einfallsrichtung der von den Halbleiteremittern kommenden Strahlung den bestimmten Rasterabstand aufweisen und somit die Strahlung bereits in dem Rasterabstand reflektieren.

Eine weitere alternative Möglichkeit, die Spreizoptik aufzubauen, sieht vor, daß die Spreizoptik für jeden der Austrittsflecken einen Lichtleiter umfaßt, daß in die Lichtleiter an einem Ende die Strahlung aus den jeweiligen Austrittsflecken der Halbleiteremitter eintritt und daß die Lichtleiter mit dem anderen Ende in dem vorbestimmten Rasterabstand angeordnete Lichtleiteraustrittsflecken festlegen.

Die Spreizoptik kann im einfachsten Fall so aufgebaut sein, daß als Lichtleiter auf einem Substrat angeordnete Lichtleiterpfade vorgesehen sind.

Rein theoretisch wäre es denkbar, mit mehreren jeweils Licht derselben Wellenlänge aussendenden Halbleiteremittern einen Bildfleck auszuleuchten. Besonders ökonomisch ist jedoch die erfindungsgemäße Vorrichtung dann, wenn die Projektionsoptik - insbesondere für die bei derselben Wellenlänge strahlenden Halbleiteremitter - während des Bildaufbauzyklus unterschiedliche Austrittsflecken auch unterschiedlichen Bildflecken der Bildreihe zuordnet.

Ferner wäre es auch denkbar, die Bildflecken den Austrittsflecken bei unterschiedlichen Bildaufbauzyklen unterschiedlich zuzuordnen. Besonders einfach ist jedoch die Projektionsoptik dann aufgebaut, wenn während jedes Bildaufbauzyklus die selben Austrittsflecken den selben Bildflecken der Bildreihe zugeordnet sind.

Die Vielzahl der Halbleiteremitter könnte so gewählt werden, daß jedem Bildfleck ein Halbleiteremitter zugeordnet ist. Um jedoch die Zahl der Halbleiteremitter, die auf kleinstem Raum nebeneinander angeordnet sind, zu begrenzen, ist es jedoch vorteilhaft, wenn die Vielzahl der Halbleiteremitter kleiner ist als die Gesamtzahl der Bildflecken der Bildreihe und wenn die Projektionsoptik die Austrittsflecken während des Bildaufbauzyklus zu aufeinanderfolgenden Zeitpunkten auf verschiedene Bildfleckenserien der Bildreihe abbildet. Das heißt insbesondere, daß die Vielzahl der Halbleiteremitter während des Bildaufbauzyklus zunächst zur Ausleuchtung eines Teils der Bildflecken der Bildreihe dient, in diesem Fall als Bildfleckenserie bezeichnet, und daß während des Bildaufbauzyklus die komplette Ausleuchtung der Bildreihe dadurch erfolgt, daß die einzelnen Bildfleckenserien zeitlich nacheinander ausgeleuchtet werden, wobei, wenn dies schnell erfolgt, das menschliche Auge die Bildreihe als kontinuierlich ausgeleuchtet sieht.

Hinsichtlich der Projektionsoptik wurden bislang keine näheren Angaben gemacht. So wäre es beispielsweise möglich, daß die Projektionsoptik in statistisch sich ändernden Intervallen während des Bildaufbauzyklus der Bildreihe die Austrittsflecken auf die verschiedenen Bildfleckenserien abbildet. Besonders vorteilhaft ist es jedoch, um eine optimale Ausleuchtung der einzelnen Bildflecken bei möglichst geringer Leistung der Halbleiteremitter zu erreichen, wenn die Projektionsoptik zur Erzeugung der Bildreihe die Austrittsflecken der Leuchtreihe sukzessive nacheinander auf verschiedene Bildfleckenserien abbildet und somit die Totzeiten zwischen der Ausleuchtung einzelner Bildfleckenserien möglichst gering gehalten werden.

Dies läßt sich konstruktiv am einfachsten dadurch realisieren, daß die Projektionsoptik ein strahlumlenkendes Element umfaßt, welches die Leuchtreihe in die aufeinanderfolgenden Bildfleckenserien abbildet.

Das strahlumlenkende Element kann dabei in unterschiedlichster Art und Weise ausgebildet sein. Dies kann beispielsweise ein Prisma oder eine Linse sein, welches bewegbar ist. Besonders vorteilhaft ist es jedoch, wenn das strahlumlenkende Element ein bewegbares Reflexionselement ist.

Hierzu ist konstruktiv in einfacher Weise vorgesehen, daß das Reflexionselement in definierte Winkelpositionen bewegbar ist, die die Leuchtreihe in jeweils eine der Bildfleckenserien abbilden.

Am einfachsten läßt sich dies konstruktiv dadurch lösen, daß das strahlumlenkende Element durch einen um eine Achse verschwenkbaren Spiegel gebildet ist.

Dieser Spiegel kann so aufgebaut sein, daß er sich während eines Bildaufbauzyklus kontinuierlich bewegt.

Alternativ dazu ist vorgesehen, daß der Spiegel während des Bildaufbauzyklus einzelne definierte Stellungen durchläuft, das heißt in einzelne definierte Stellungen gebracht wird, beispielsweise durch eine Schrittmotoransteuerung oder eine Ansteuerung mittels Piezoelementen oder ähnliches.

Bislang wurde bei der Beschreibung der erfindungsgemäßen Lösung lediglich vom Aufbau einer Bildreihe aus unterschiedlichen Bildfleckenserien ausgegangen, da dies der einfachste Fall der erfindungsgemäßen Lösung ist. Besonders vorteilhaft ist es jedoch, wenn die Projektionsoptik während des Bildaufbauzyklus das Bild aus mehreren nebeneinanderliegenden Bildreihen aufbaut und somit ein zweidimensionales Bild, wie beispielsweise ein Fernsehbild, aufbaut.

Besonders zweckmäßig ist es hierfür, wenn die Projektionsoptik die Bildflecken einer Bildfleckenserie in jeder Bildreihe erzeugt und dann die nächste Bildfleckenserie in jeder Bildreihe erzeugt, so daß zuerst in jeder Bildreihe die eine Bildfleckenserie erzeugt wird und dann in jeder Bildreihe die nächste Bildfleckenserie.

Vorzugsweise ist hierzu vorgesehen, daß die Projektionsoptik ein strahlumlenkendes Element umfaßt, welches die Bildfleckenserien in aufeinanderfolgenden Bildreihen erzeugt, wobei das strahlumlenkende Element insbesondere ein bewegbares Reflexionselement oder eine bewegbare Linse oder ein bewegbares Prisma ist.

Zweckmäßigerweise ist das strahlumlenkende Element in definierte Positionen bewegbar, die die Bildfleckenserien in jeder der Bildreihen erzeugen.

Eine besonders vorteilhafte Lösung sieht vor, daß das strahlumlenkende Element durch einen um eine Drehachse rotierenden Polygonspiegel gebildet ist.

Vorzugsweise ist der Polygonspiegel dabei so aufgebaut, daß er mit jeder Polygonfläche die von der Leuchtreihe kommende Strahlung so reflektiert, daß diese die Zahl der nebeneinanderliegenden Bildreihen durch Drehung in einem bestimmten Winkelbereich durchläuft und dann zur nächsten Polygonfläche übergeht.

Ein besonders zweckmäßiges Ausführungsbeispiel der erfindungsgemäßen Lösung sieht vor, daß der Polygonspiegel Spiegelflächen aufweist, die jeweils gegenüber einer Parallelen zur Drehachse um einen unterschiedlichen Winkel geneigt sind, so daß jede Spiegelfläche eine Bildfleckenserie in allen Bildreihen des Bildes erzeugt und dann im Übergang zur nächsten Spiegelfläche die nächste Bildfleckenserie in allen Bildreihen des Bildes erzeugt wird.

Mit einem erfindungsgemäßen Polygonspiegel ist eine sukzessive Abbildung der Leuchtreihe in mehrere Bildreihen besonders einfach dadurch realisierbar, daß der Polygonspiegel mit konstanter Drehzahl rotiert.

Hierbei ist vorzugsweise vorgesehen, daß der Polygonspiegel mit jeder Polygonfläche die von der Leuchtreihe kommende Strahlung so reflektiert, daß diese die Zahl der Bildreihen durch Drehung in einem bestimmten Winkelbereich durchläuft und dann zur nächsten Polygonfläche übergeht.

Besonders vorteilhaft funktioniert die Erzeugung des Bildes mit einem strahlumlenkenden Element, wenn die Projektionsoptik die Strahlung der Halbleiteremitter der Leuchtreihe im wesentlichen auf das strahlumlenkende Element fokussiert.

Bei all den Ausführungsbeispielen, bei welchen aus einer Leuchtreihe mehrere Bildreihen durch die Projektionsoptik erzeugt werden, ist vorteilhafterweise vorgesehen, daß zur Ausleuchtung der Bildflecken einer Bildreihe ein Zeitraum von mindestens 10 ºs zur Verfügung steht.

In dem Fall, in welchem alle den Bildflecken einer Bildreihe zugeordneten Halbleiteremitter gleichzeitig angesteuert werden, bedeutet dies, daß die Zeitintervalle zwischen zwei Ansteuerzeitpunkten ebenfalls mindestens 10 ºs betragen. Werden nur die einem Teil der Bildpunkte zugeordneten Halbleiteremitter gleichzeitig angesteuert, so multipliziert sich diese Zahl mit dem Bruchteil der gleichzeitig ausgeleuchteten Bildflecken der Bildreihe. Im Fall von mindestens einem Zehntel der Bildpunkte stehen mindestens 1 ºs als Intervall zwischen zwei Ansteuerzeitpunkten zur Verfügung.

Alternativ zu dem Fall, daß die Projektionsoptik eine Leuchtreihe sukzessive auf mehrere Bildreihen abbildet, ist vorgesehen, daß jeder Bildreihe eine Leuchtreihe zugeordnet ist.

In diesem Fall ist die Projektionsoptik so ausgebildet, daß sie die Vielzahl von Leuchtreihen auf die Vielzahl von Bildreihen abbildet.

Ganz generell wurden zur Art der Abbildungsqualität der Projektionsoptik keinerlei nähere Angaben gemacht. So sieht ein vorteilhaftes Ausführungsbeispiel vor, daß die Projektionsoptik durch Vergrößerung der Austrittsflecken in Längsrichtung der Bildreihe geringe Abstände voneinander aufweisende Bildflecken erzeugt.

Vorzugsweise ist dabei vorgesehen, daß die Bildflecken im wesentlichen aneinander angrenzen.

Besonders zweckmäßig bei der erfindungsgemäßen Lösung ist es, wenn die Halbleiteremitter die Strahlung im Zeitraum zwischen zwei aufeinanderfolgenden Ansteuerzeitpunkten emittieren. Der Vorteil hierbei ist darin zu sehen, daß im Gegensatz zu den aus dem Stand der Technik bekannten Vorrichtungen nicht nur zu einem einzigen Zeitpunkt eine kurze Ausleuchtung eines Bildpunktes erfolgen kann, sondern aufgrund der Tatsache, daß die Projektionsoptik die Vielzahl der Halbleiteremitter den Bildflecken zuordnet, während der gesamten Zeit der Zuordnung die Möglichkeit besteht, die Bildflecken auszuleuchten.

Aus Steuerungsgründen ist es hierbei besonders zweckmäßig, wenn die Ansteuerzeitpunkte in konstanten Zeitabständen aufeinander folgen.

Ein vorteilhaftes Ausführungsbeispiel sieht dabei vor, daß die Halbleiteremitter die Strahlung mit variabel einstellbarer Intensität emittieren, um entsprechend der einstellbaren Intensität die Bildflecken auszuleuchten.

Bei dieser Variante hat es sich als zweckmäßig erwiesen, wenn die Halbleiteremitter zwischen zwei Ansteuerpunkten die Strahlung mit der eingestellten Intensität im wesentlichen unverändert emittieren.

Günstigerweise ist hierzu vorgesehen, daß die Einstellung der Intensität der Strahlung jedes Halbleiteremitters zu jedem Ansteuerzeitpunkt erfolgt und insbesondere beim nächsten Ansteuerzeitpunkt die Möglichkeit besteht, die Intensitätseinstellung zu ändern.

Diese Lösung hat den großen Vorteil, daß der gesamte Zeitraum zwischen zwei aufeinanderfolgenden Ansteuerzeitpunkten zur Verfügung steht, um die den Austrittsflecken dieser Halbleiteremitter zugeordneten Bildflecken auszuleuchten, so daß eine wesentlich geringere Leistung des einzelnen Halbleiteremitters ausreicht, um für das zeitlich mittelnde menschliche Auge eine bestimmte Ausleuchtung eines Bildpunktes zu erreichen, im Gegensatz zu den aus dem Stand der Technik bekannten Lösungen, bei welchen aufgrund des Springens von Bildfleck zu Bildfleck ein sehr kurzer Zeitraum zur Verfügung steht, um diesen Bildfleck auszuleuchten und im zeitlichen Mittel eine gewünschte, vom menschlichen Auge beobachtete Intensität zu erreichen.

Alternativ hierzu ist vorgesehen, daß die Halbleiteremitter zwischen den Ansteuerzeitpunkten entweder die Strahlung mit maximaler Intensität, aber variabel einstellbarer Zeitdauer oder keine Strahlung emittieren. Diese Art der Ansteuerung der Halbleiteremitter hat den Vorteil, daß damit eine einfache, insbesondere für das Betreiben von Halbleiteremittern geeignete Betriebsweise möglich ist.

Insbesondere erfolgt bei einem derartigen Ausführungsbeispiel die Einstellung einer mittleren, von einem menschlichen Beobachter wahrgenommenen Intensität durch Modulation der Zeitdauer der Emission der Strahlung.

Vorzugsweise erfolgt dabei die Einstellung der Zeitdauer der Emission der Strahlung zu jedem Ansteuerzeitpunkt, so daß die im Mittel durch einen menschlichen Beobachter erkannte Intensität ständig unterschiedlich einstellbar ist.

Auch bei diesem Ausführungsbeispiel besteht der Vorteil darin, daß eine wesentlich größere Zeitdauer für die Ausleuchtung zur Verfügung steht, da im Maximalfall die gesamte Zeitdauer zwischen zwei Ansteuerpunkten für das Erreichen der gewünschten mittleren Intensität zur Verfügung steht.

Hinsichtlich der Ausleuchtung der Bildflecken durch die Halbleiteremitter wurden bislang keine näheren Angaben gemacht. So ist im einfachsten Fall vorgesehen, daß jeder Bildfleck durch einen einzigen Halbleiteremitter ausleuchtbar ist. Damit ist aber lediglich ein einfarbiges Bild erzeugbar.

Um ein mehrfarbiges Bild erzeugen zu können, ist vorzugsweise vorgesehen, daß jeder Bildfleck durch drei Halbleiteremitter ausleuchtbar ist, von denen jeder Strahlung mit einer derartiger Wellenlänge emittiert, daß durch Überlagerung der Strahlung der drei Halbleiteremitter weißes Licht erzeugbar ist.

Beispielsweise erfolgt die Erzeugung eines für das menschliche Auge erkennbaren Farbeindrucks durch beliebige Mischung von drei Grundfarben, wie insbesondere Blau, Grün und Rot. Damit können mit der erfindungsgemäßen Vorrichtung nicht nur mehrfarbige statische Bilder sondern auch mehrfarbige bewegte Bilder erzeugt werden.

Hinsichtlich der Ansteuerung bei drei einen Bildfleck ausleuchtenden Halbleiteremittern ist vorzugsweise vorgesehen, daß die drei, jeweils einen Bildfleck ausleuchtenden Halbleiteremitter gleichzeitig ansteuerbar sind, um sicherzustellen, daß stets die gewünschte Farbe im ausgeleuchteten Bildfleck erkennbar ist.

Hinsichtlich des Aufbaus der Leuchtreihe wurden damit noch keine näheren Angaben gemacht. So ist unabhängig von der Frage, ob ein Bildfleck durch einen oder durch drei Halbleiteremitter ausleuchtbar ist, vorteilhafterweise vorgesehen, daß die Leuchtreihe mindestens eine Reihe von Halbleiteremittern aufweist, die Strahlung derselben Wellenlänge emittieren, da eine derartige Leuchtreihe besonders einfach, beispielsweise durch ein sogenanntes "Array" von Halbleiteremittern herstellbar ist.

In dem Fall, in dem ein mehrfarbiges Bild erzeugt werden soll, ist vorteilhafterweise vorgesehen, daß zur Ausleuchtung der Bildflecken einer Bildreihe die entsprechende Leuchtreihe drei parallel zueinander verlaufende Reihen von Halbleiteremittern umfaßt, wobei die Halbleiteremitter jeder Reihe Strahlung mit im wesentlichen derselben Wellenlänge emittieren. Eine derartige Zusammenfassung der Halbleiteremitter, die Strahlung derselben Wellenlänge emittieren, ist ebenfalls aus Gründen der Herstellbarkeit derselben in Form eines sogenannten "Arrays" vorteilhaft.

Hinsichtlich der Art der Ansteuerung der Halbleiteremitter wurden bislang keine weiteren Angaben gemacht. So sieht ein vorteilhaftes Ausführungsbeispiel vor, daß von den Halbleiteremittern einer Leuchtreihe mindestens diejenigen zu demselben Ansteuerzeitpunkt ansteuerbar sind, die einem Zehntel der Bildflecken einer Bildreihe zugeordnet sind. Damit wird eine signifikante Verlängerung der Zeit zur Ansteuerung der Halbleiteremitter erreicht.

Noch vorteilhafter ist es, wenn von jeder Leuchtreihe mindestens diejenigen Halbleiteremitter gleichzeitig ansteuerbar sind, welche einem Drittel der Bildflecken einer Bildreihe zugeordnet sind.

Noch besser ist es, wenn die allen Bildflecken einer Bildreihe zugeordneten Halbleiteremitter gleichzeitig ansteuerbar sind.

Wie die gleichzeitige Ansteuerung mehrerer Halbleiteremitter realisiert ist, wurde bislang nicht im einzelnen erläutert. So sieht ein vorteilhaftes Ausführungsbeispiel vor, daß zur gleichzeitigen Ansteuerung mehrerer Halbleiteremitter ein Zwischenspeicher vorgesehen ist, aus welchem die Ansteuerparameter zur gleichzeitigen Ansteuerung der mehreren Halbleiteremitter parallel auslesbar sind.

Vorzugsweise ist zur Abspeicherung der Ansteuerparameter vorgesehen, daß der Zwischenspeicher zwischen den Ansteuerzeitpunkten die Ansteuerparameter für die Halbleiteremitter aufnimmt.

Vorzugsweise ist dabei vorgesehen, daß die Ansteuerparameter in den Zwischenspeicher seriell einlesbar sind.

Die Erzeugung der Ansteuerparameter erfolgt im einfachsten Fall durch einen Bildgenerator. Vorzugsweise ist der Bildgenerator so konzipiert, daß dieser die Ansteuerparameter seriell generiert und in den Zwischenspeicher einliest.

Um die Möglichkeit zu schaffen, die Halbleiteremitter zwischen zwei Ansteuerzeitpunkten definiert anzusteuern ist vorzugsweise vorgesehen, daß jedem Halbleiteremitter eine Ansteuerung zugeordnet ist, welche den Ansteuerparameter von einem Ansteuerzeitpunkt bis zum nächsten Ansteuerzeitpunkt zwischenspeichert.

Insbesondere bei Verwendung von drei mit unterschiedlicher Wellenlänge strahlenden Halbleiteremittern zur Ausleuchtung eines Bildflecks ist vorzugsweise vorgesehen, daß die Projektionsoptik die Strahlung der drei mit unterschiedlicher Wellenlänge strahlenden Halbleiteremitter zu einem Strahlenbündel vereinigt, um die Abbildung zu vereinfachen.

Bei den vorstehend beschriebenen Lösungen ist es günstig, wenn die Projektionsoptik die Strahlung der drei mit unterschiedlicher Wellenlänge strahlenden Halbleiteremitter auf einen Bildfleck abbildet.

Die Strahlung der drei jeweils mit unterschiedlicher Wellenlänge emittierenden und die Farbe eines Bildflecks bestimmenden Halbleiteremitter ist vorzugsweise vor Auftreffen auf dem Umlenkelement zu einem Strahlenbündel zusammengefaßt, welches dann von dem Umlenkelement von einem Bildfleck zum nächsten bewegt wird.

Alternativ dazu ist es aber auch denkbar, daß die Strahlung der drei mit unterschiedlicher Wellenlänge emittierenden Halbleiteremitter getrennt auf das Umlenkelement trifft und anschließend von der Projektionsoptik auf einen einzigen Bildfleck abgebildet wird, wobei in diesem Fall die Projektionsoptik so ausgebildet sein muß, daß sie die Strahlung der drei Halbleiteremitter bei allen von diesen auszuleuchtender Bildflecken auf diese abbildet.

Alternativ dazu ist vorgesehen, daß die Projektionsoptik die Strahlung der drei, mit unterschiedlicher Wellenlänge strahlenden Halbleiteremitter in drei, nicht deckungsgleich angeordnete Teilbildflecken abbildet.

Diese Lösung ist insoweit einfacher, als der Aufwand einer deckungsgleichen Abbildung der Strahlung mit unterschiedlicher Wellenlänge zur Erzeugung der Bildflecken entfällt und insoweit ausreichend, als die Teilbildflecken klein genug sind, um für das menschliche Auge als ein Bildfleck mit einer Farbe zu erscheinen.

Bei diesem Ausführungsbeispiel ist vorteilhafterweise vorgesehen, daß die Strahlung der drei jeweils mit unterschiedlicher Wellenlänge emittierenden und die Farbe eines Bildflecks bestimmenden Halbleiteremitter getrennt auf das Umlenkelement trifft, so daß dieses die Strahlung auch getrennt umlenkt.

Hinsichtlich der Halbleiteremitter wurden bislang keine näheren Angaben gemacht. Grundsätzlich ist es möglich, als Halbleiteremitter Halbleiterleuchtdioden oder auch Superstrahlung erzeugende Halbleiteremitter oder Elektrolumineszenz-Elemente einzusetzen.

Als besonders vorteilhaft hat es sich erwiesen, wenn die Halbleiteremitter Halbleiterlaser umfassen.

Hierzu sind besonders zweckmäßige Typen sogenannte Kantenemitter, da sich diese in einfacher und insbesondere kostengünstiger Weise als sogenannte "Arrays", das heißt Reihen von Halbleiteremittern auf einem Substrat, herstellen lassen. Diese Kantenemitter eignen sich auch gut für nachgeordnete Frequenzvervielfacher.

Alternativ dazu ist es aber auch vorteilhaft, wenn die Halbleiteremitter sogenannte Vertikalemitter sind, die sich ebenfalls in einfacher Weise in Form einer Matrix anordnen lassen und bei welchen insbesondere eine Ankopplung faseroptischer Elemente, beispielsweise von Frequenzverdopplern, möglich ist.

Insbesondere in den Fällen, in denen zur vorteilhaften Erzeugung von Strahlung der gewünschten Wellenlänge, beispielsweise der Farben Blau, Grün oder Rot die Verwendung einer Halbleiterstrahlungsquelle kombiniert mit einem Frequenzverdoppler günstig erscheint, umfaßt ein erfindungsgemäßer Halbleiteremitter eine Halbleiterstrahlungsquelle, insbesondere einen Halbleiterlaser, und einen Frequenzverdoppler für die von der Halbleiterstrahlungsquelle emittierte Strahlung.

Vorzugsweise ist dabei der Frequenzverdoppler so aufgebaut, daß er eine die Strahlung jeder Strahlungsquelle auf eine Leistungsdichte von mindestens 10⁵W/cm² komprimiert führende oder komprimierende Wellenleiterstruktur und ein in der Wellenleiterstruktur angeordnetes frequenzverdoppelndes Medium umfaßt.

Das Vorsehen eines derartigen Wellenleiterstruktur ermöglicht es in einfacher Weise, die hohe, für die Frequenzverdopplung erforderliche Leistungsdichte in dem frequenzverdoppelnden Medium über eine ausreichende Wechselwirkungslänge aufrecht zu erhalten.

Der Frequenzverdoppler kann dabei in unterschiedlichster Art und Weise relativ zur Strahlungsquelle angeordnet sein. So sieht ein vorteilhaftes Ausführungsbeispiel vor, daß zwischen jeder Strahlungsquelle und jedem Frequenzverdoppler eine die Strahlung in die Wellenleiterstruktur fokussierende Optik angeordnet ist, um zu erreichen, daß die gesamte divergierend aus der Strahlungsquelle austretende Strahlung in die Wellenleiterstruktur eingekoppelt wird.

Alternativ dazu ist vorgesehen, daß jeder Frequenzverdoppler sich unmittelbar an die jeweilige Strahlungsquelle anschließt. In diesem Fall ist ebenfalls sichergestellt, daß die von der Strahlungsquelle erzeugte Strahlung im wesentlichen in den nachgeordneten Frequenzverdoppler eintritt, insbesondere dann, wenn dessen Wellenleiterstruktur an die Querschnittsform der aus der Strahlungsquelle austretenden Strahlung angepaßt ist.

Dieses Ausführungsbeispiel hat außerdem den Vorteil, daß das Vorsehen und Justieren einer fokussierenden Optik zwischen der Strahlungsquelle und dem Frequenzverdoppler entfallen kann.

Bei einem zweckmäßigen Ausführungsbeispiel ist vorgesehen, daß die Strahlungsquellen einer Leuchtreihe in einer Reihe angeordnet sind und die Frequenzverdoppler der Leuchtreihe ausgangsseitig der Strahlungsquellen in ebenfalls einer Reihe, vorzugsweise mit denselben Abständen wie die Strahlungsquellen, angeordnet sind.

Vorzugsweise lassen sich die Strahlungsquellen dann besonders einfach und kostengünstig herstellen, wenn mehrere der Strahlungsquellen auf einem gemeinsamen Substrat angeordnet sind.

In gleicher Weise lassen sich auch die Frequenzverdoppler dann kostengünstig herstellen, wenn mehrere Frequenzverdoppler auf einem gemeinsamen Substrat angeordnet sind.

Insbesondere läßt sich eine Vielzahl von Strahlungsquellen und eine Vielzahl von Frequenzverdopplern dann ideal kombinieren, wenn diese jeweils auf einem gemeinsamen Substrat in jeweils denselben Abständen sitzen, so daß damit die Möglichkeit besteht, die Frequenzverdoppler unmittelbar im Anschluß an die Strahlungsquellen oder mit einer dazwischengeschalteten Fokussierungsoptik anzuordnen, wobei jedoch stets sowohl Strahlungsquelle als auch Frequenzverdoppler auf einer gemeinsamen optischen Achse sitzen.

Hinsichtlich der Art und Ausbildung der Wellenleiterstruktur wurden bislang keine näheren Angaben gemacht. So sieht ein vorteilhaftes Ausführungsbeispiel vor, daß die Wellenleiterstruktur jedes Frequenzverdopplers ein single mode-Wellenleiter ist.

Hinsichtlich der Ausbildung der Wellenleiterstruktur selbst wurden im Zusammenhang mit der bisherigen Beschreibung einzelner Ausführungsbeispiele keine weiteren Angaben gemacht. So sieht ein vorteilhaftes Ausführungsbeispiel vor, daß die Wellenleiterstruktur durch ein das den Wellenleiterkern bildende, frequenzverdoppelnde Medium umgebendes und einen niedrigeren Brechungsindex als der Wellenleiterkern aufweisendes Wandmaterial gebildet ist. Auf diese Art und Weise läßt sich in einfacher Weise die Wellenleiterstruktur mit den gewünschten Abmessungen herstellen.

Vorzugsweise ist dabei vorgesehen, daß das Wandmaterial auf demselben Material wie das frequenzverdoppelnde Medium basiert und aufgrund unterschiedlicher Dotierung einen niedrigeren Brechungsindex als dieses aufweist um an den Grenzflächen zwischen dem Wandmaterial und dem frequenzverdoppelnden Medium eine Führung der Strahlung zu erhalten.

Die derartige Herstellung einer Wellenleiterstruktur ist in unterschiedlichster Art und Weise möglich. Ein vorteilhaftes Ausführungsbeispiel sieht vor, daß die Wellenleiterstruktur durch Dotierung das Wandmaterial bildender Bereiche in einem mit dem frequenzverdoppelnden Medium identischen Material gebildet ist. Dieses Ausführungsbeispiel schafft die Möglichkeit, ausgehend von dem Material des frequenzverdoppelnden Mediums in einfacher Weise den Wellenleiter durch Dotierung der Bereiche zu erreichen, welche das Wandmaterial für den Wellenleiter bilden sollen.

Eine derartige Dotierung ist beispielsweise durch Diffusion von Dotierungselementen möglich. Besonders vorteilhaft lassen sich derartige dotierte Bereiche dann herstellen, wenn die Wellenleiterstruktur durch auf einem vorzugsweise einkristallinen Substrat aufgetragene und das Wandmaterial umfassende Schichten gebildet ist.

In gleicher Weise läßt sich in einfacher Weise das frequenzverdoppelnde Medium dann herstellen, wenn dieses durch eine auf einem Substrat aufgetragene Schicht gebildet ist.

Vorzugsweise ist das Substrat ebenfalls aus dem Material des frequenzverdoppelnden Mediums.

Insbesondere hat die Verwendung eines Substrats den Vorteil, daß eine definierte Ausrichtung von optischen Achsen des frequenzverdoppelnden Mediums durch Ausrichtung des Substrats vorgebbar ist, sofern dieses Substrat auf dem Material basiert, welches auch für das frequenzverdoppelnde Medium vorgesehen ist.

Um die für die Frequenzverdopplung erforderliche Phasenanpassung zu erreichen, ist vorzugsweise vorgesehen, daß das frequenzverdoppelnde Medium so ausgebildet und hinsichtlich seiner optischen Achsen zum Wellenleiterkanal so ausgerichtet ist, daß eine unkritische Phasenanpassung zwischen der von der Strahlungsquelle erzeugten und eingekoppelten Strahlung und der verdoppelten Strahlung in Längsrichtung der Wellenleiterstruktur erfolgt.

Vorzugsweise ist dabei zur Durchführung dieser Phasenanpassung vorgesehen, daß das frequenzverdoppelnde Medium auf eine definierte Temperatur bringbar und auf dieser haltbar ist, so daß die optimale Phasenanpassung nach einmaliger Einstellung der Temperatur aufrecht erhalten werden kann.

Alternativ dazu ist bei einem vorteilhaften Ausführungsbeispiel vorgesehen, daß das frequenzverdoppelnde Medium so ausgebildet und ausgerichtet ist, daß in Längsrichtung des Wellenleiters eine Quasiphasenanpassung erfolgt.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine schematische Seitenansicht eines ersten Ausführungsbeispiels einer Vorrichtung zur Erzeugung eines Bildes, dessen Projektionsoptik nicht Gegenstand der Ansprüche ist;
- Fig. 2: eine schematische Seitenansicht des ersten Ausführungsbeispiels gemäß Fig. 1 mit überproportional vergrößerter Darstellung der optischen Abbildung und schematischer Darstellung der Steuerung;
- Fig. 3: eine schematische Darstellung eines Verlaufs der Intensität der Strahlung eines Halbleiteremitters nach verschiedenen Ansteuerzeitpunkten;
- Fig. 4: eine schematische Darstellung eines zweiten Ausführungsbeispiels der erfindungsgemäßen Steuerung zum ersten Ausführungsbeispiel der erfindungsgemäßen Vorrichtung;
- Fig. 5: eine schematische Darstellung des Verlaufs der Intensität der Strahlung des Halbleiteremitters bei dem zweiten Ausführungsbeispiel der Steuerung;
- Fig. 6: eine schematische Darstellung eines dritten Ausführungsbeispiels der Steuerung bei einer speziellen Form eines Halbleiteremitters;
- Fig. 7: eine Ansicht ähnlich Fig. 1 eines zweiten Ausführungsbeispiels einer Vorrichtung zur Erzeugung eines Bildes mit einer erfindungsgemäßen Projektionsoptik und mit einem ersten Ausführungsbeispiel einer Spreizoptik;
- Fig. 8: eine ausschnittsweise vergrößerte Darstellung eines zweiten Ausführungsbeispiels einer Spreizoptik für das zweite Ausführungsbeispiel der erfindungsgemäßen Vorrichtung gemäß Fig. 7;
- Fig. 9 und Fig. 9a: eine schematische ausschnittsweise Darstellung eines dritten Ausführungsbeispiels einer Spreizoptik für das zweite Ausführungsbeispiel gemäß Fig. 7;
- Fig. 10: eine teilweise perspektivische schematische Darstellung eines dritten Ausführungsbeispiels einer Vorrichtung zur Erzeugung eines Bildes, dessen Projektionsoptik nicht Gegenstand der Ansprüche ist;
- Fig. 11: eine schematische Darstellung des ersten Ausführungsbeispiels der erfindungsgemäßen Steuerung im Zusammenhang mit dem dritten Ausführungsbeispiel;
- Fig. 12: eine schematische Darstellung des Intensitätsverlaufs ähnlich Fig. 3;
- Fig. 13: eine schematische Darstellung des Intensitätsverlaufs ähnlich Fig. 5 bei Verwendung des zweiten Ausführungsbeispiels der erfindungsgemäßen Steuerung im Zusammenhang mit dem dritten Ausführungsbeispiel der erfindungsgemäßen Vorrichtung;
- Fig. 14: eine schematische Darstellung ähnlich Fig. 10 eines vierten Ausführungsbeispiels einer Vorrichtung zur Erzeugung eines Bildes mit einer erfindungsgemäßen Projektionsoptik;
- Fig. 15: eine schematische Darstellung eines fünften Ausführungsbeispiels der Vorrichtung zur Erzeugung eines Bildes, dessen Projektionsoptik nicht Gegenstand der Ansprüche ist;
- Fig. 16: eine vergrößerte Darstellung des Polygonspiegels des fünften Ausführungsbeispiels der erfindungsgemäßen Vorrichtung;
- Fig. 17: eine schematische Darstellung eines sechsten Ausführungsbeispiels der Vorrichtung zur Erzeugung eines Bildes mit einer erfindungsgemäßen Projektionsoptik;
- Fig. 18: eine schematische Darstellung eines siebten Ausführungsbeispiels der Vorrichtung zur Erzeugung eines Bildes;
- Fig. 19: eine schematische Darstellung eines achten Ausführungsbeispiels der Vorrichtung zur Erzeugung eines Bildes;
- Fig. 20: eine schematische Darstellung eines als Kantenemitter ausgebildeten Halbleiteremitters;
- Fig. 21: eine schematische Darstellung eines als Vertikalemitter ausgebildeten Halbleiteremitters;
- Fig. 22: eine Draufsicht auf ein erstes Ausführungsbeispiel eines Arrays aus Halbleiteremittern umfassend Strahlungsquellen und nachgeordnete Frequenzverdoppler;
- Fig. 23: eine perspektivische Explosionsdarstellung des Arrays von Strahlungsquellen und des Arrays von Frequenzverdopplern gemäß Fig. 22;
- Fig. 24: eine Variante des Arrays von Frequenzverdopplern gemäß Fig. 22;
- Fig. 25: ein zweites Ausführungsbeispiel eines Arrays von Halbleiteremittern, gebildet aus Strahlungsquellen und Frequenzverdopplern sowie einer dazwischengeschalteten Optik;

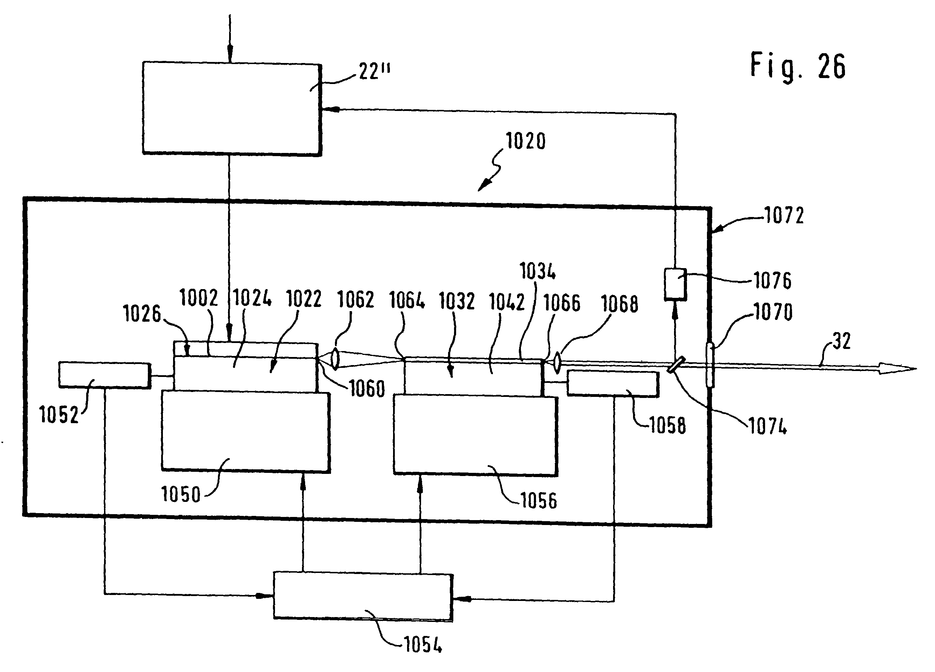

- Fig. 26: eine schematische Seitenansicht eines dritten Ausführungsbeispiels eines erfindungsgemäßen in einem Gehäuse gekapselten Halbleiteremitters mit entsprechenden Steuerungen und
- Fig. 27: eine ausschnittsweise vergrößerte Darstellung einer Variante der Abbildungsoptik gemäß Fig. 26.

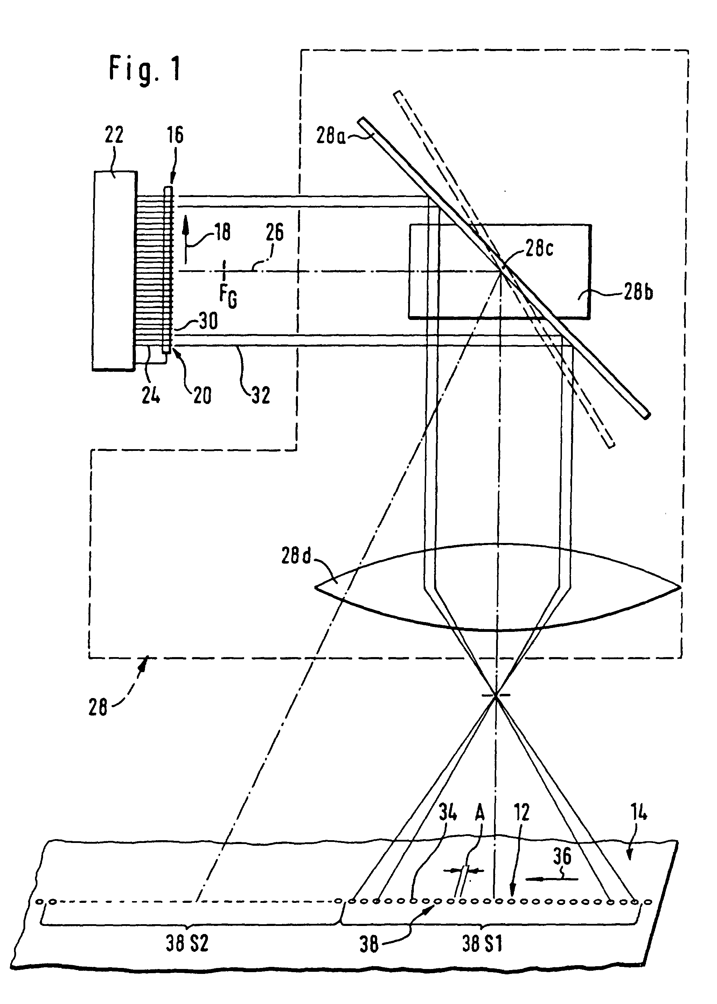

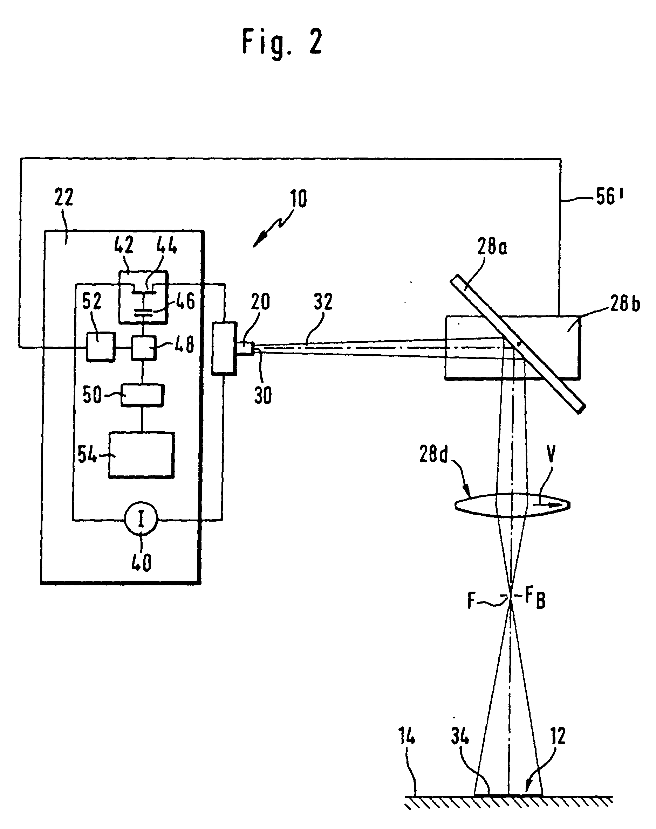

Ein in Fig. 1 und 2 dargestelltes erstes einfachstes Ausführungsbeispiel einer erfindungsgemäßen Vorrichtung, als Ganzes mit 10 bezeichnet, zur Erzeugung eines Bildes 12 auf einer Bildfläche 14 - beispielsweise einer Projektionsfläche, auf welcher das Bild für ein menschliches Auge erkennbar erzeugt wird - umfaßt eine Vielzahl von in einer Leuchtreihe 16 entlang einer Längsrichtung 18 der Leuchtreihe 16 angeordneten Halbleiteremittern 20, welche jeweils einzeln von einer gemeinsamen Steuerung 22 über einzelne Steuerleitungen 24 ansteuerbar sind.

Die Längsrichtung 18 verläuft dabei quer zu einer optischen Achse 26 einer als Ganzes mit 28 bezeichneten Projektionsoptik, welche einen Austrittsfleck 30 jedes Halbleiteremitters 20, aus welchem von diesem erzeugte Strahlung 32 austritt, auf einen Bildfleck 34 der Bildfläche 14 abbildet, welcher von der von dem Halbleiteremitter 20 erzeugten Strahlung dann ausgeleuchtet ist. Die Projektionsoptik 28 ist dabei so aufgebaut, daß der Austrittsfleck 30 jedes Halbleiteremitters 20 zu einem bestimmten Zeitpunkt nur auf einen einzigen Bildfleck 34 in der Bildfläche 14 projiziert wird.

Im einfachsten Fall umfaßt die Projektionsoptik 28, wie in Fig. 1 und 2 schematisch dargestellt einen Kippspiegel 28a, welcher durch einen Schwenkantrieb 28b um eine Kippachse 28c schwenkbar ist und eine Linse 28d, welche mit der aus jedem Halbleiteremitter 20 mit geringfügiger Divergenz austretenden Strahlung 32 aufgrund geometrischer Abbildung den Bildfleck 34 ausleuchtet, wobei der Bildfleck 34 in der Regel eine Fläche aufweist, die einem Mehrfachen des Austrittsflecks 30 entspricht.

Die Korrektur der Bildwölbung erfolgt entweder über eine geeignet geformte Linse 28d oder über eine geeignet gesteuerte Bewegung des Spiegels so, dieser nicht um die feststehende Kippachse 28c schwankt, sondern sich die Kippachse ebenfalls bewegt.

Im einfachsten Fall, in welchem die Leuchtreihe 16 aus einzelnen, in der Längsrichtung 18 nebeneinander angeordneten Halbleiteremittern 30 besteht und die Projektionsoptik 28 den Kippspiegel 28a und die einfache Linse 28d umfaßt, entstehen auf der Bildfläche 14 in einer Längsrichtung 36 nebeneinanderliegende einzelne Bildflecken 34, die insgesamt eine Bildreihe 38 bilden. Vorzugsweise ist die Projektionsoptik 28 so ausgebildet, daß sich die einzelnen Bildflecken 34 der Bildreihe 38 in Richtung der Längsrichtung 36 nicht überlappen. Besonders bevorzugt ist eine Ausführungsform der Projektionsebene, in welcher die Bildflecken 34 mit ihren äußeren Berandungen in geringem Abstand A aufeinanderfolgen oder aneinander angrenzen.

Da die Zahl der Halbleiteremitter 20 geringer ist als die Gesamtzahl der Bildflecken 34 der Bildreihe 38 wird die Bildreihe 38 aus mehreren Sätzen 38S nebeneinanderliegender Bildflecken 34 zusammengesetzt, wobei in jedem Satz 38S die Bildflecken unmittelbar aufeinanderfolgen und die Sätze 38S in der Längsrichtung 36 ebenfalls unmittelbar aufeinanderfolgen, so daß die nebeneinanderliegenden Bildflecken 34 aufeinanderfolgender Sätze 38S ebenfalls den Abstand A voneinander aufweisen, wie benachbarte Bildflecken 34 innerhalb eines der Sätze 38S.

Die Gesamtheit der Sätze 38S vom Bildflecken 34 ergibt somit Gesamtheit der Bildflecken 34 der Bildreihe 38.

Hierzu ist der Kippspiegel 28a in unterschiedliche Stellungen verkippbar, so daß, wie beispielsweise in Fig. 1 mit der durchgezogenen Stellung des Kippspiegels 28a dargestellt, der Satz 38S1 von Bildflecken 34 erzeugbar ist und im Anschluß an diesen, wie in Fig. 1 durch die gestrichelt gezeichnete Stellung des Kippspiegels 28a dargestellt, der sich daran anschließende Satz 38S2.

Dazu ist ein entsprechendes Kippen des Kippspiegels 28a um die Kippachse 28c mittels des Schwenkantriebs 28b durchzuführen, wobei der Schwenkantrieb 28b so ausgebildet ist, daß er nach Ausleuchten der zum Satz 38S1 gehörenden Bildflecken während einer Zeit Ta1 schnell in die gestrichelt gezeichnete Stellung verschwenkt, um während der Zeit Ta2, welche gleich groß ist, wie die Zeit Ta1 die Bildflecken 34 des Satzes 38S2 auszuleuchten.

Die in Fig. 1 dargestellten Verhältnisse sind lediglich schematisch. Erfindungsgemäß ist vorgesehen, daß eine Bildreihe 38 beispielsweise aus zehn Sätzen 38S von Bildflecken 34 aufgebaut ist und somit der Kippspiegel 28a auch in zehn unterschiedliche Stellungen verschwenkbar ist, wobei jeder der Sätze 38S von Bildflecken 34 während der Zeitdauer Ta ausgeleuchtet ist, die für alle Sätze 38S gleich groß ist.

Somit ist beispielsweise durch eine Leuchtreihe 16 mit 125 Halbleiteremittern 20 eine Bildreihe 38 aus 1250 Bildflecken 34 dadurch aufbaubar, daß die Leuchtreihe 16 während eines Bildaufbauzyklus nacheinander 10 nebeneinanderliegende Sätze 38S von Bildflecken 34 ausleuchtet, wobei die Bildaufbauzyklen sich periodisch wiederholen.

Zur Variation der Helligkeit der Bildflecken 34 für das das Bild 12 beobachtende menschliche Auge umfaßt die Steuerung 22, wie in Fig. 2 dargestellt, eine für alle Halbleiteremitter 20 gemeinsame Stromquelle 40, welche einen für jeden Halbleiteremitter 20 vorgesehenen Stromsteuerblock 42 versorgt, der beispielsweise einen FET-Transistor 44 als stromsteuerndes Element umfaßt, an dessen Gate als Speicherelement ein Kondensator 46 angeschlossen ist. Dieser Kondensator 46 jedes Stromsteuerblocks 42 ist über einen Ansteuerschalter 48 mit einer bestimmten Ladung aufladbar, wobei die Ladung im Kondensator 46 den Strom durch den FET-Transistor 44 festlegt. Die in dem Kondensator 46 zu speichernde Ladung wird dabei aus einem Zwischenspeicher 50 für jeden Kondensator 46 jedes Stromsteuerblocks 42 durch Triggern des Ansteuerschalters 48 aus dem Zwischenspeicher 50 ausgelesen, wobei vorzugsweise der Zwischenspeicher 50 alle Ansteuerparameter speichert und durch Triggern des Ansteuerschalters 48 alle Ansteuerparameter gleichzeitig in die Kondensatoren 46 aller Stromsteuerblocks 42 eingelesen werden.

Zum Triggern des Ansteuerschalters 48 ist ein Triggerblock 52 vorgesehen.

Zwischen den Zeitpunkten t, zu welchen der Triggerblock 52 den Ansteuerschalter 48 triggert, besteht die Möglichkeit, über einen Bildgenerator 54 die einzelnen Ansteuerparameter seriell in den Zwischenspeicher 50 einzulesen, so daß zu jedem Triggerzeitpunkt t der Zwischenspeicher 50 die aktuellen Ansteuerparameter für die gesamten Halbleiteremitter 20 der Leuchtreihe 16 gespeichert hat.

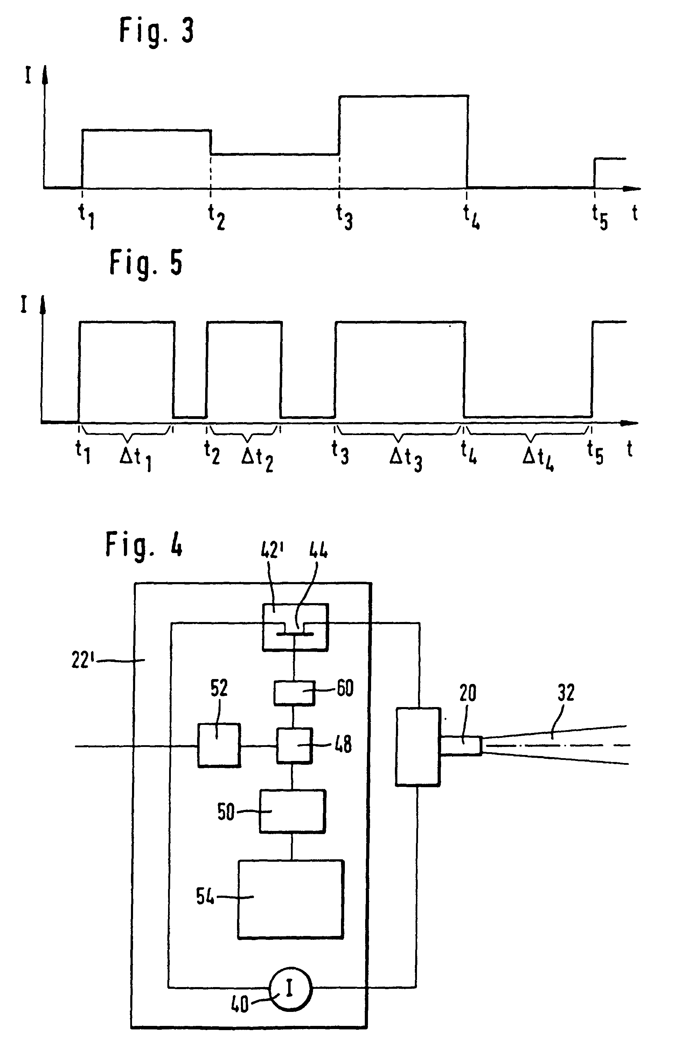

Betrachtet man nun einen Halbleiteremitter 20, so kann die Intensität der von diesem ausgesandten Strahlung 32, wie in Fig. 3 dargestellt, zum Ansteuerzeitpunkt t₁ durch entsprechendes Laden des Kondensators 46 des entsprechenden Steuerblocks 42 festgelegt werden. Die Ladung bleibt danach im Kondensator 46 erhalten, so daß die Intensität der Strahlung des Halbleiteremitters bis zum nächsten Ansteuerzeitpunkt t₂ konstant bleibt. Wird zu diesem Zeitpunkt die Ladung im Kondensator 46 erniedrigt, so bleibt bis zum nächsten Ansteuerzeitpunkt t₃ auch diese Intensität erhalten. Zum Ansteuerzeitpunkt t₃ wird beispielsweise die maximale Intensität und somit die maximale Ladung in dem Kondensator 46 gespeichert, während zum Ansteuerzeitpunkt t₄ die minimale Ladung gespeichert wird, so daß der Halbleiteremitter 20 keine Strahlung oder Strahlung mit der Intensität 0 zwischen dem Ansteuerzeitpunkt t₄ und t₅ aussendet.

Dadurch daß für jeden Halbleiteremitter 20 ein eigener Steuerblock 42 vorgesehen ist, kann nun jeder einzelne Halbleiteremitter 20 der Leuchtreihe 16 einzeln angesteuert werden, so daß die Bildreihe 38 Bildflecken 34 unterschiedlichster Intensität aufweist.

Der Triggerblock 52 ist einerseits über eine Leitung 56 mit dem Schwenkantrieb 28 verbunden und so mit dem Schwenkantrieb synchronisiert, daß beispielsweise zum Ansteuerzeitpunkt t₁ alle Kondensatoren 46 für alle Steuerblöcke 42 mit den Werten geladen werden, die für das Ausleuchten aller Bildflecken 34 des Satzes 38S1 erforderlich sind und zum Zeitpunkt t₂ die Kondensatoren 46 so geladen werden, daß sie die Werte für die Bildflecken 34 des Satzes 38S2 speichern. Gleichzeitig führt der Schwenkantrieb 28b zum Ansteuerzeitpunkt t₂ die Schwenkbewegung von der in Fig. 1 durchgezogenen Stellung in die strichpunktierte Stellung mit möglichst großer Geschwindigkeit durch.

Die Zeitdauer Ta, während welcher alle Bildflecken 34 des Satzes 38S1 entsprechend den in dem Bildgenerator 54 gespeicherten Helligkeitswerten ausgeleuchtet werden, entspricht somit der Zeitdauer zwischen t₁ und t₂.

Dieser Vorgang wird während eines Bildaufbauzyklus so lange wiederholt, bis alle Sätze 38S von Bildflecken 34 der Bildreihe 38 nacheinander während der Zeitdauer Tₐ ausgeleuchtet wurden.

Bei einem alternativen Ausführungsbeispiel der erfindungsgemäßen Steuerung 22', dargestellt in Fig. 4 sind diejenigen Komponenten, die mit der Steuerung 22 identisch sind, mit denselben Bezugszeichen versehen, so daß bezüglich deren Beschreibung auf die Ausführungen zur Steuerung 22 vollinhaltlich Bezug genommen wird.

Im Gegensatz zur Steuerung 22 umfaßt jeder Steuerblock 42' lediglich den Steuertransistor 44, dessen Gate durch eine Pulsformerstufe 60 angesteuert wird und der lediglich zwischen dem Zustand ein- und ausgeschaltet wird. Die Pulsformerstufe speichert ihrerseits die zum jeweiligen Ansteuerzeitpunkt t übermittelten Ansteuerparameter und formt entsprechend den Ansteuerparametern einen Steuerpuls unterschiedlicher Länge für den Steuertransistor 44 nach dem Prinzip der Pulsweitenmodulation, so daß auch der Halbleiteremitter 20 entweder ein- oder ausgeschaltet ist, allerdings mit unterschiedlich langer Dauer zwischen den jeweiligen Ansteuerzeitpunkten t, wie in Fig. 5 dargestellt.

Die konstanten Leistungswerte zwischen den Ansteuerpunkten t1, t2, t3 und t4 werden durch unterschiedlich lange Pulsdauern Δt₁, Δt₂, Δt₃ realisiert, wobei der Halbleiteremitter während der Pulsdauern Δt₁, Δt₂ und Δt₃ jeweils Strahlung 32 mit der maximalen Leistung aussendet. Hierbei wird der Effekt zunutze gemacht, daß das menschliche Auge bei Betrachten des Bildfleckes 34 eine zeitliche Mittelung vornimmt und somit die unterschiedlichen Pulsweiten Δt₁, Δt₂ und Δt₃ den Eindruck im menschlichen Auge vermitteln, wie wenn die in Fig. 3 dargestellten Leistungswerte während des gesamten Zeitraums zwischen den Ansteuerzeiten t₁, t₂, t₃ und t₄ vorliegen würden.

Im übrigen ist die Steuerung 22' mit der Steuerung 22 identisch aufgebaut.

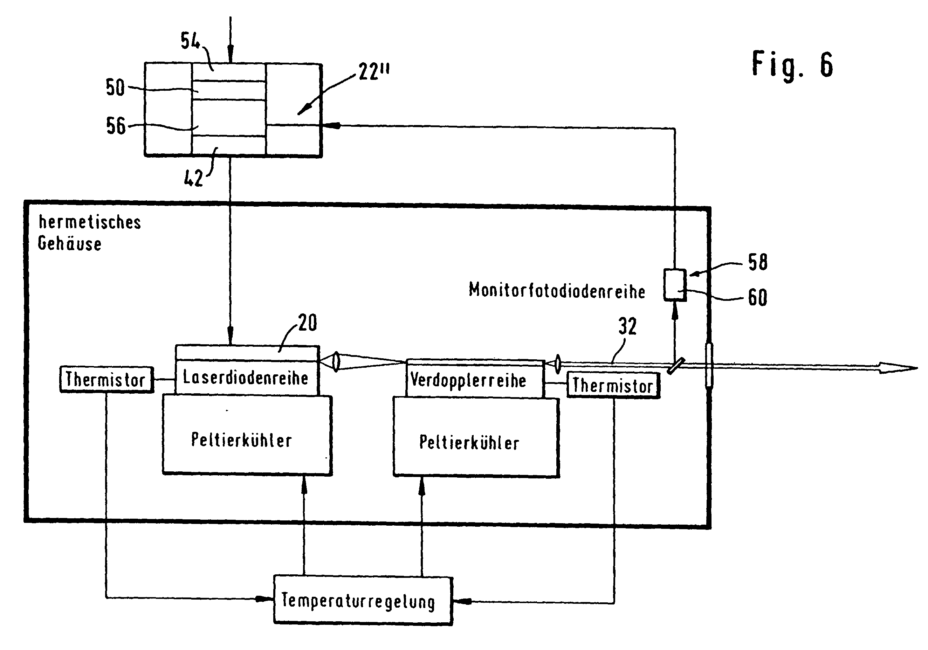

Ein drittes Ausführungsbeispiel einer erfindungsgemäßen Steuerung 22", dargestellt in Fig. 6 ist im Gegensatz zu dem vorstehend beschriebenen Ausführungsbeispiel so aufgebaut, daß jeder Stromsteuerblock den Strom des jeweiligen Halbleiteremitters 20 auf den im Zwischenspeicher 50 für jeden Satz 38S abgespeicherten Sollwert mittels einer Regelschaltung 56 während der vorgesehenen Ausleuchtungszeitdauer Ta regelt, wobei die Regelschaltung 56 über zu einer Monitorfotodiodenreihe 58 zusammengefaßte Monitorfotodioden 60 die Lichtmenge der von jedem Halbleiteremitter 20 ausgesandten Strahlung 32 mißt und entsprechend dem Meßwert den jeweiligen Halbleiteremitter 20 ansteuert.

Dabei kann die Ansteuerung des Halbleiteremitters 20 mit variablem Strom, wie in Fig. 3 dargestellt, erfolgen, so daß die Regelschaltung 56 die Größe des Stroms für jeden Halbleiteremitter 20 regelt, oder es ist vorgesehen, daß die Regelschaltung 56 die Zeitdauer Δt regelt, während welcher jeder Halbleiteremitter 20 mit maximalem Strom versorgt ist, wobei die Regelschaltung 56 bei Erreichen der als Sollwert im Zwischenspeicher 50 vorgegebenen Lichtmenge den Strom zum jeweiligen Halbleiteremitter 20 abschaltet.

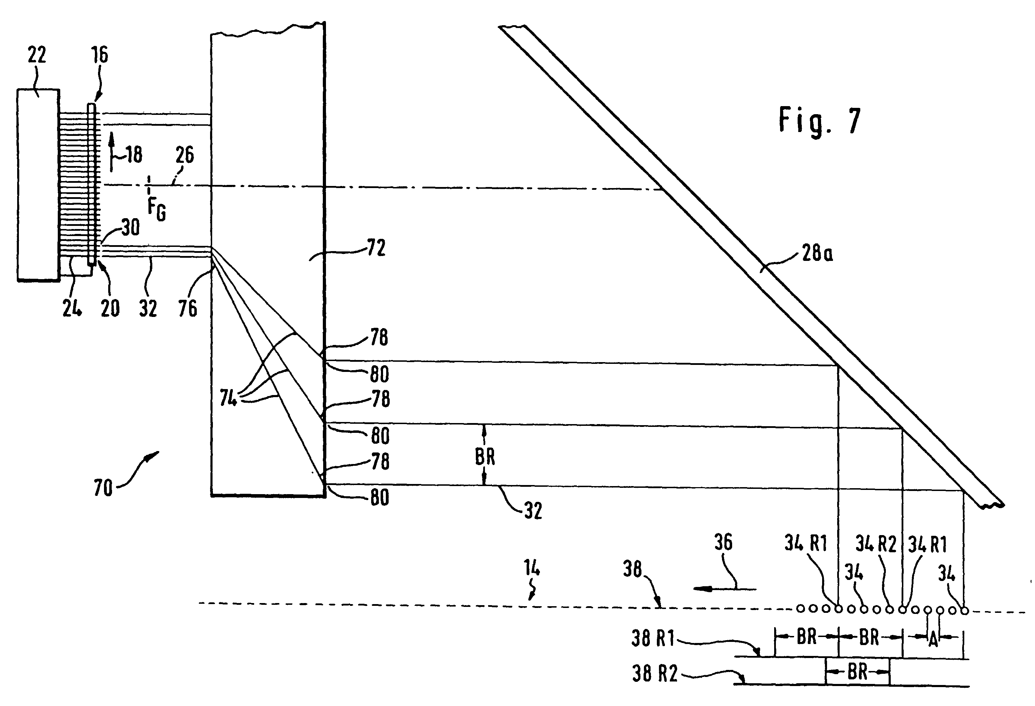

Bei einem zweiten Ausführungsbeispiel einer erfindungsgemäßen Vorrichtung, dargestellt in Fig. 7, umfaßt die Projektionsoptik 28 eine die Strahlung 32 aus den Halbleiteremittern auf einen größeren Abstand bringende Spreizoptik 70, welche im einfachsten Fall, wie in Fig. 7 dargestellt, ein Substratmaterial 72 mit einem Brechungsindex n₁ aufweist, in welches Wellenleiterbahnen 74 eingebracht sind, die einen Brechungsindex n₂ aufweisen, der größer als n₁ ist.

In jede dieser Wellenleiterbahnen 74 wird die von den jeweiligen Austrittsflecken 30 kommende Strahlung 32 der einzelnen Halbleiteremitter 20 im Bereich eines Endes 76 eingekoppelt und zu einem zweiten Ende 78 geführt, aus welchem dann die Strahlung 32 wieder austritt.

Dabei liegen die ersten Enden 76 der Wellenleiterbahnen 74 in Abständen, welche dem Abstand der Austrittsflecken 30 der einzelnen Halbleiteremitter 20 entsprechen, so daß die aus den Austrittsflecken 30 austretende Strahlung 32 im Bereich der ersten Enden 76 in die Wellenleiterbahnen 74 eintritt und von diesen zu den zweiten Enden 78 geführt wird, welche Austrittsflecken 80 für die Strahlung 32 aufweisen, die in einem Bildfleckenrasterabstand BR voneinander liegen. Die aus der Spreizoptik 70 austretende Strahlung 32 wird dann wiederum durch den Kippspiegel 28a auf die Bildreihe 38 in der Bildfläche 14 abgebildet, wobei in einer Stellung des Kippspiegels 28a aufeinanderfolgende Halbleiteremitter 20 einzelnen Bildflecken 34 zugeordnet sind, deren Abstand eines Vielfaches des Abstandes A der Bildflecken 34 der Bildreihe 38 beträgt. Die von der Leuchtreihe 16 in einer Stellung des Kippspiegels 28a ausgeleuchtete Bildflecken 34 bilden dabei ein Bildfleckenraster 38R, wobei zwischen einzelnen Bildflecken 34R1 des Bildfleckenrasters 38R1 jeweils dieselbe Zahl von Bildflecken 34 liegt.

Das Bildfleckenraster 38R1 erstreckt sich dabei über die gesamte Ausdehnung der Bildreihe 38 in der Längsrichtung 36.

Wird der Kippspiegel 28a geringfügig verkippt, so wird der Halbleiteremitter 20, der bisher einem der Bildflecken 34R1 zugeordnet war, dem danebenliegenden Bildfleck 34R2 zugeordnet, wobei durch die Zuordnung aller Halbleiteremitter 20 zu dem jeweils neben den Bildflecken 34R1 des Bildfleckenrasters 38R1 liegenden Bildfleck 34R2 ein neues Bildfleckenraster 38R2 entsteht, dessen Bildflecken 34R2 in der Bildreihe 38 die auf die Bildflecken 34R1 des Bildfleckenrasters 38R1 folgenden Bildflecken sind.

Durch weitere Verkippung des Kippspiegels 28a erfolgt eine Zuordnung der Halbleiteremitter 20 der Leuchtreihe 16 zu den wieder danebenliegenden Bildflecken 34 zur Bildung eines Bildfleckenrasters 38R3 usw., so lange, bis sämtliche Bildflecken 34 der Bildreihe 38 einmal Teil eines Bildfleckenrasters 38R waren. So lange dauert auch der Bildaufbauzyklus, nach welchem aufgrund der kammähnlichen Zuordnung einzelner Bildflecken zu jeweils einem Bildfleckenraster und dem Weitersetzen des Bildfleckenrasters zu jeweils benachbarten Bildflecken sämtliche Bildflecken 34 der Bildreihe 38 ausleuchtbar sind.

Die Bildaufbauzyklen wiederholen sich dabei periodisch in gleicher Weise, wie im Zusammenhang mit dem ersten Ausführungsbeispiel der erfindungsgemäßen Vorrichtung beschrieben, wobei bei diesem Ausführungsbeispiel die Kippwinkel, um welche der Kippspiegel 28a zu verschwenken ist, wesentlich kleiner sind als beim ersten Ausführungsbeispiel.

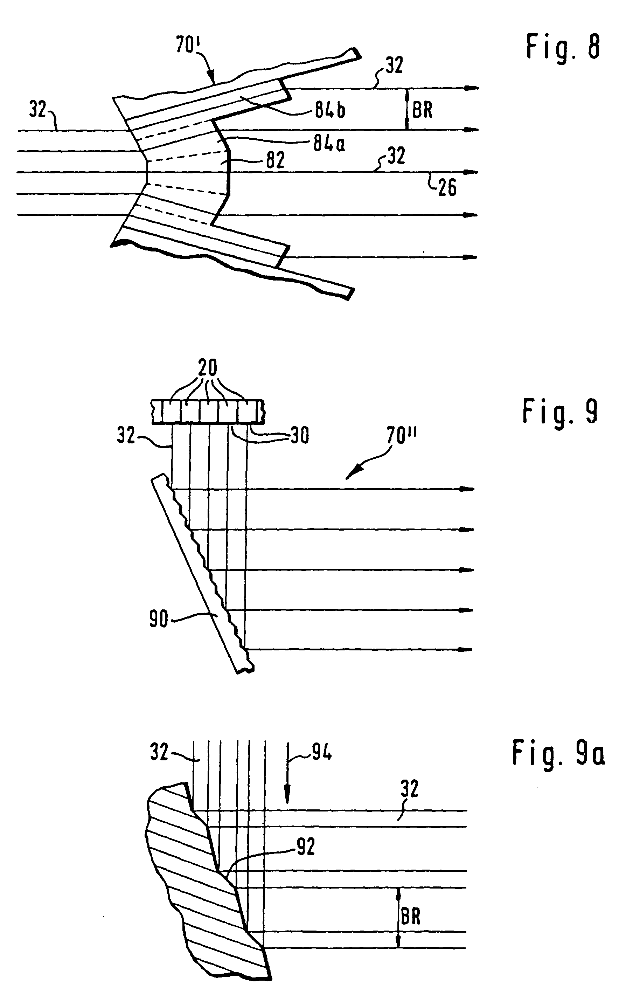

Ein weiteres Ausführungsbeispiel einer erfindungsgemäßen Spreizoptik 70', ausschnittsweise dargestellt in Fig. 8, umfaßt eine Vielzahl von Prismenelementen 82, 84, wobei beispielsweise das Prismenelement 82 ein von der Strahlung 32 unverändert passiertes Prismenelement ist, welches koaxial zur optischen Achse 26 angeordnet ist, während die Prismenelemente 84a, b, etc. jeweils die Strahlung 32 aus den einzelnen Halbleiteremittern 20 symmetrisch zur optischen Achse 26 auf den Bildfleckenrasterabstand BR bringen und hierzu jeweils so ausgebildet sind, daß sie die Strahlung 32 in einem definierten Winkel zu optischen Achse 26 von dieser wegführen und aufgrund unterschiedlicher Länge in Durchstrahlrichtung die Strahlung 32 auf den Bildfleckenrasterabstand BR bringen, der gleich dem im Zusammenhang mit dem zweiten Ausführungsbeispiel der erfindungsgemäßen Vorrichtung in Fig. 7 beschriebenen Bildfleckenrasterabstand BR ist.

Bei einer zweiten Variante 70" einer erfindungsgemäßen Spreizoptik, dargestellt in Fig. 9 wird die von den Halbleiteremittern 20 kommende Strahlung 32 durch ein Reflexionsgitter 90 reflektiert, welches Reflexionsflächen 92 aufweist, die in Einfallsrichtung 94 der von den Halbleiteremittern kommenden Strahlung 32 einen Abstand aufweisen, welcher dem Bildfleckenrasterabstand BR entspricht und senkrecht zur Einfallsrichtung 94 einen Abstand aufweisen, welcher dem Abstand der Austrittsflecken 30 der Halbleiteremitter entspricht, so daß die von den Austrittsflecken 30 kommende Strahlung 32 unmittelbar auf die Reflexionsflächen 92 auftrifft und von diesen als Strahlung 32 mit dem gewünschten Bildfleckenrasterabstand BR reflektiert wird.

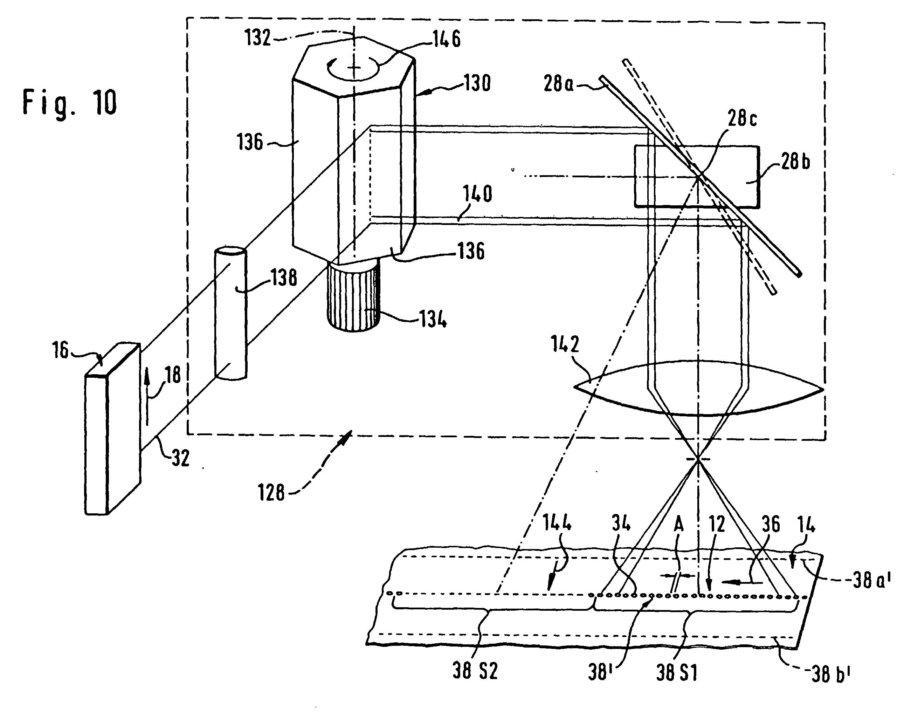

Bei einem dritten Ausführungsbeispiel der erfindungsgemäßen Vorrichtung, dargestellt in Fig. 10, umfaßt die als Ganzes mit 128 bezeichnete Projektionsoptik zusätzlich zu den im Zusammenhang mit dem ersten Ausführungsbeispiel beschriebenen Elementen, wie Kippspiegel 28a und Schwenkantrieb 28b, noch zusätzlich einen Polygonspiegel 130, welcher um eine zur Längsrichtung 18 parallele Achse 132 rotierend durch einen Antrieb 134 angetrieben ist. Der Polygonspiegel 130 weist seinerseits eine Vielzahl von in gleichen Winkelabständen um die Achse 132 angeordneten Polygonflächen 136 auf, wobei jeweils eine der Polygonflächen 136 als Reflexionsfläche dient.

Die Leuchtreihe 16 umfaßt genau wie beim ersten Ausführungsbeispiel eine Vielzahl in der Längsrichtung 18 aufeinanderfolgend angeordneten Halbleiteremitter 20, die ebenfalls durch eine Steuerung 22, 22' oder 22" angesteuert sind.

Die aus den Austrittsflecken 30 austretende Strahlung 32 wird zunächst durch eine erste Fokussierungsoptik 138 auf die in Reflexionsstellung stehende Polygonfläche 136 fokussiert, und die von der in Reflexionsstellung stehende Polygonfläche 136 reflektierte Strahlung 140 wird vom Kippspiegel 28a reflektiert, durch eine zweite Fokussierungsoptik 142 zwischenfokussiert und auf der Bildfläche 14 abgebildet.

Dadurch, daß die in Reflexionsstellung stehende Polygonfläche 136 sich so lange, solange sie von der Strahlung 32 angestrahlt wird, um die Achse 132 dreht, entsteht auf der Bildfläche 14 nicht nur eine Bildreihe 38, sondern es entsteht eine Vielzahl von Bildreihen 38', die in einer senkrecht zur Längsrichtung 36 verlaufenden Querrichtung 144 nebeneinander angeordnet sind. Dabei wird eine erste Bildreihe 38a' dann auf der Bildfläche 14 erzeugt, wenn die in Reflexionsstellung stehende Polygonfläche 136 mit ihrem in Drehrichtung 146 vordersten Bereich 136a von der Strahlung 32 beaufschlagt wird und die letzte Bildreihe 38b' wird dann erzeugt, wenn die in Reflexionsstellung stehende Polygonfläche 136 mit ihrem in Drehrichtung 146 des Polygonspiegels hintersten Bereich 136b von der Strahlung 32 beaufschlagt wird.

Durch den rotierenden Polygonspiegel 130 wird nun bei einer unveränderten Stellung des Kippspiegels 28a jeder Bildfleckensatz 38S zunächst auf alle Reihen 38', das heißt von Reihe 38a' bis Reihe 38b' durch eine der Polygonflächen 136 abgebildet. Sobald beim rotierenden Polygonspiegel 130 die in Reflexionsstellung stehende Polygonfläche 136 zur nächsten wechselt, hat sich der Kippspiegel 28a soweit weiterbewegt, daß dieser in allen Bildreihen 38' den nächstfolgenden Bildfleckensatz 38S, also beispielsweise den Bildfleckensatz 38S₂ ausleuchtet und diese Ausleuchtung beibehält, bis die jetzt in Reflexionsstellung stehende Polygonfläche 136 diesen Bildfleckensatz auf alle Bildreihen 38' projeziert hat. Beim Springen zur nächsten Polygonfläche 136 hat sich ebenfalls der Kippspiegel 28a wieder weiterbewegt, so daß nunmehr die Projektion des wiederum nächstfolgenden Bildfleckensatzes 38S₃ auf die Bildreihen 38' erfolgt.

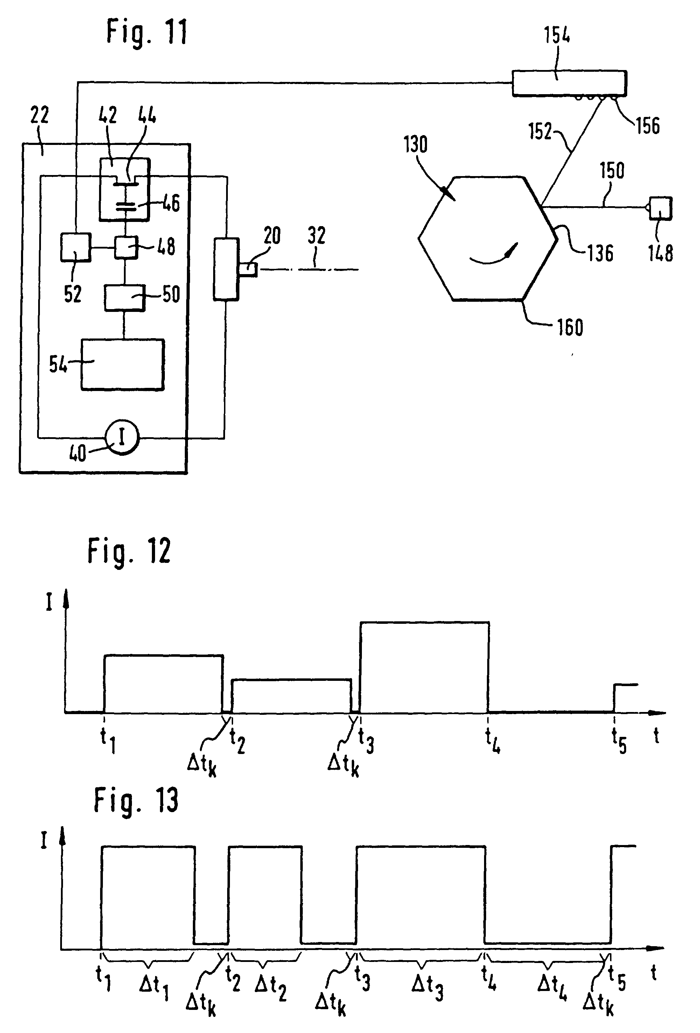

Die Synchronisation des rotierenden Polygonspiegels 130 erfolgt ebenfalls mit der jeweiligen Steuerung 22, 22' oder 22" über die Verbindung mit dem Triggerblock 52, wobei die Kippbewegung des Kippspiegels 28a mit der Drehbewegung des Polygonspiegels 130 so zu synchronisieren ist, daß der Kippspiegel 28a die Leuchtreihe 16 auf den jeweils nächstfolgenden Bildfleckensatz abbildet, wenn die nächstfolgende Polygonfläche 136 in Reflexionsstellung steht. Vorzugsweise ist hierzu der Antrieb 134 des Polygonspiegels mit einem Winkeldekodierer versehen und gleichzeitig auch der Schwenkantrieb 28b des Kippspiegels 28a, so daß eine einfache Synchronisation über die jeweilige Steuerung 22, 22' oder 22" möglich ist (Fig. 11).

Der Kippspiegel 28a ist dabei von dem Schwenkantrieb 28b so angetrieben, daß er schnell von einer Stellung in die andere wechselt und dieses Wechseln ungefähr die gleiche Zeit beansprucht, wie der Wechsel von einer Polygonfläche zur nächsten, so daß die Totzeit hierbei möglichst gering wird.

Die Zeitintervalle, in welchen sich der Kippspiegel 28a bewegt und von einem Satz zum anderen wechselt, betragen beispielsweise bei 125 Halbleiteremittern und 100 Bildaufbauzyklen pro Sekunde sowie 1250 Bildflecken pro Bildreihe maximal 1 ºs, während dieser maximal 1 ºs bildet dann der Polygonspiegel 130 mit einer Polygonfläche 136 jeweils einen Satz von Bildflecken auf alle Bildreihen 38'ab.

Zur Synchronisation des rotierenden polygonen Spiegels 130 mit der Steuerung 22 ist, wie in Fig. 11 dargestellt, ein weiterer Halbleiteremitter 148 vorgesehen, welcher mit einem Lichtstrahl 150 beispielsweise die der in Reflexionsstellung stehenden Polygonfläche 136 gegenüberliegende Polygonfläche 136 beleuchtet, wobei die reflektierte Strahlung 152 auf einen als Ganzes mit 154 bezeichneten Detektor trifft, welcher einen Detektorbereich 156 oder mehrere Detektorbereiche 156 aufweist, wobei die Detektorbereiche 156 eine Ausdehnung haben, welche ungefähr den Querschnitt der reflektierten Strahlung 152 entspricht, so daß beim Auftreffen der reflektierten Strahlung 152 auf dem jeweiligen Detektorbereich 156 eine genaue Winkelstellung des Polygonspiegels 130 festgelegt ist.

Beispielsweise ist der erste Detektorbereich 156 so positioniert, daß bei Auftreffen der reflektierten Strahlung 152 auf diesem die in Reflexionsstellung stehende Polygonfläche 136 die Austrittsflecken 30 der Halbleiteremitter 20 der Leuchtreihe 16 in den jeweiligen Bildfleckensatz 38S auf die erste Bildreihe 38a' abbildet. Ferner ist vorzugsweise die zweite Detektorfläche 156 so angeordnet, daß bei Auftreffen der reflektierten Strahlung 152 auf dieser die in Reflexionsstellung stehende Polygonfläche 136 die Austrittsflecken 30 der Halbleiteremitter 20 der Leuchtreihe 16 auf die zweite Bildreihe 38' abbildet und so weiter.

Das Auftreffen der reflektierten Strahlung 152 auf einem der Detektorbereiche 156 erzeugt im Detektor 154 ein Signal, welches beispielsweise dem Triggerblock 52 zugeleitet wird und diesen veranlaßt, gegebenenfalls mit entsprechendem Zeitversatz, den Ansteuerschalter 48 zu triggern, so daß zu diesen Ansteuerzeitpunkten t der Ansteuerparameter für jeden Stromsteuerblock 42 geändert werden kann. Damit besteht die Möglichkeit, auf jede Bildzeile 38' Bildflecken 34 mit unterschiedlicher Intensitätsverteilung zu projizieren und somit auf der Bildfläche 14 ein sich in Längsrichtung 36 und Querrichtung 144 erstreckendes zweidimensionales Bild aus den einzelnen Bildflecken 34 der Bildreihe 38' aufzubauen. Dabei werden die Ansteuerzeitpunkte t so mit der Drehung des Polygonspiegels 130 synchronisiert, daß diese vorzugsweise mit den Zeitpunkten zusammenfallen, in welchen die Strahlung 32 auf eine zwischen zwei Polygonflächen 136 liegende Kante 160 auftreffen würde.

Besonders vorteilhaft ist es dabei, wenn zu dem Zeitpunkt, zu dem die Strahlung 32 direkt auf die Kante 160 auftreffen würde, alle Halbleiteremitter kurzzeitig während der Zeit Δtₖ abgeschaltet werden und somit so lange keine Strahlung 32 emittieren, bis die auf die Kante 160 folgende Polygonfläche 136 wieder in einer Reflexionsstellung steht und die Strahlung 32 wiederum so reflektiert, daß die Austrittsflecken 30 der Halbleiteremitter 20 in der ersten Bildreihe 38a' liegen. Eine derartige Ansteuerung ist in Fig. 12 für den Fall der Steuerung 22 dargestellt. In diesem Fall ist der Ansteuerschalter 48 so auszubilden, daß er beim jeweiligen Ansteuerzeitpunkt t zunächst den Kondensator 46 entlädt und dann wieder mit dem korrekten, im Zwischenspeicher 50 gespeicherten Ansteuerparameter lädt.

Im Fall der Steuerung 22' ist, wie in Fig. 13 dargestellt, ein Abschalten der Halbleiteremitter 20 kurz vor dem jeweiligen Ansteuerzeitpunkt t einfach dadurch zu erreichen, daß die maximale Pulsweite Δt um den Betrag Δtₖ zeitlich kürzer ist als der Zeitraum zwischen aufeinanderfolgenden Ansteuerzeitpunkten t, welche vorzugsweise in konstanten Zeitabständen aufeinander folgen.

Bei dem in Fig. 10 dargestellten Ausführungsbeispiel ist vorgesehen, daß der Antrieb 134 den Polygonspiegel 130 mit im wesentlichen stabilisierter Drehzahl kontinuierlich dreht.

Alternativ dazu ist es denkbar, als Antrieb 134 einen Schrittmotor vorzusehen, der gesteuert in einzelne Drehstellungen bringbar ist und somit den Polygonspiegel 130 nicht kontinuierlich dreht, sondern in jeweils derartige Drehstellungen dreht, daß die in Reflexionsstellung stehende Polygonfläche 136 sukzessive unterschiedliche Winkelstellungen gegenüber der Strahlung 32 einnimmt, wobei jede einzelne Winkelstellung der Reflexion der Austrittsflecken 30 der Leuchtreihe 16 in eine der Bildreihen 38' entspricht und somit die Bildreihen 38' während einer definierten Zeit ausgeleuchtet werden und danach die in Reflexionsstellung stehende Polygonfläche 136 in die nächste Drehstellung "springt". In diesem Fall besteht auch die Möglichkeit, über die Kante 160 durch eine schnelle Drehung des Polygonspiegels 130 hinwegzuspringen.

Entsprechend der Ansteuerung des Schrittmotors kann dann auch der Triggerblock 52 angesteuert werden, so daß das Erfassen der Drehstellung des Polygonspiegels 130 mittels des Detektors 154 entfallen kann.

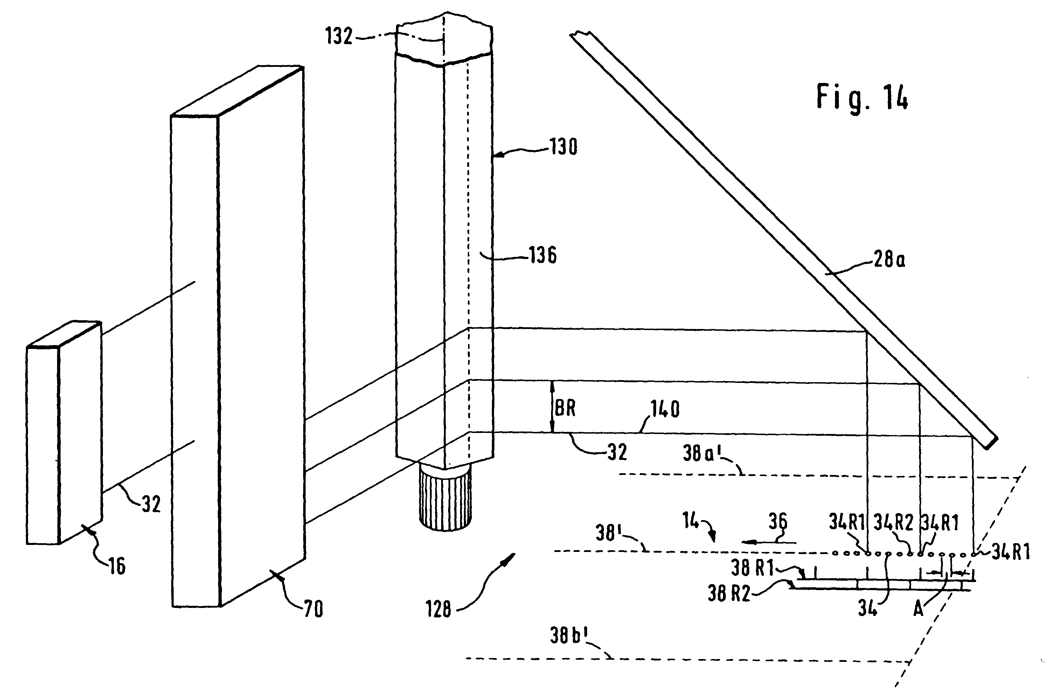

Ein viertes Ausführungsbeispiel der erfindungsgemäßen Vorrichtung, dargestellt in Fig. 14, basiert auf dem zweiten Ausführungsbeispiel, und sieht eine Projektionsoptik 128 vor, die in gleicher Weise ausgebildet ist, wie beim dritten Ausführungsbeispiel, so daß die durch die Spreizoptik 70 auf den Bildfleckenrasterabstand BR gespreizte Strahlung 32 nunmehr in gleicher Weise wie beim zweiten Ausführungsbeispiel auf den Kippspiegel 28a trifft und in jeder der Bildreihen 38' die Bildflecken 34 ausleuchtet, die von dem jeweiligen Bildfleckenraster 38R umfaßt sind.

Bei diesem Ausführungsbeispiel wird analog zum dritten Ausführungsbeispiel ein und dasselbe Bildfleckenraster 38R durch den rotierenden Polygonspiegel 130 in allen Bildreihen 38' erzeugt und dann zum nächsten Bildfleckenraster 38R übergegangen und dieses wiederum in allen Bildreihen 38', das heißt also von der Bildreihe 38a' bis zur Bildreihe 38b', erzeugt.

Bei diesem Ausführungsbeispiel kann der Kippspiegel 28a stehen bleiben und nach Erzeugung desselben Bildfleckenrasters 38R in jeder der Bildreihen 38' auf die nächste Kippstellung springen, um das nächstfolgende Bildfleckenraster 38R in allen Bildreihen 38' zu erzeugen, es ist aber auch möglich, den Kippspiegel 28a langsam kontinuierlich so zu verschwenken, daß nachdem ein und dasselbe Bildfleckenraster 38R in allen Bildreihen 38' erzeugt wurde, die Verkippung so groß ist, daß in der ersten Bildreihe 38a' bereits das nächste Bildfleckenraster erzeugt wird. In diesem Fall liegen dann aber einander entsprechende Bildflecken 34 in den aufeinanderfolgenden Bildreihen 38' nicht auf einer Geraden, die senkrecht zur Längsrichtung 36 verläuft, sondern auf einer Geraden, die in einem Winkel < 90° zur Längsrichtung 36 verläuft, die Schräglage der einander entsprechenden Bildflecken 34 in den einzelnen Bildreihen 38' ist jedoch aber aufgrund der geringen Abweichung des Winkels zwischen der einander entsprechende Bildreihen repräsentierenden Geraden und der Längsrichtung 36 tolerierbar.

Die Zeitdauer zur Abbildung jedes Bildfleckenrasters 38R auf alle Bildreihen 38' beträgt maximal eine 1 ºs und danach wird zum nächsten Bildfleckenraster 38R gewechselt.

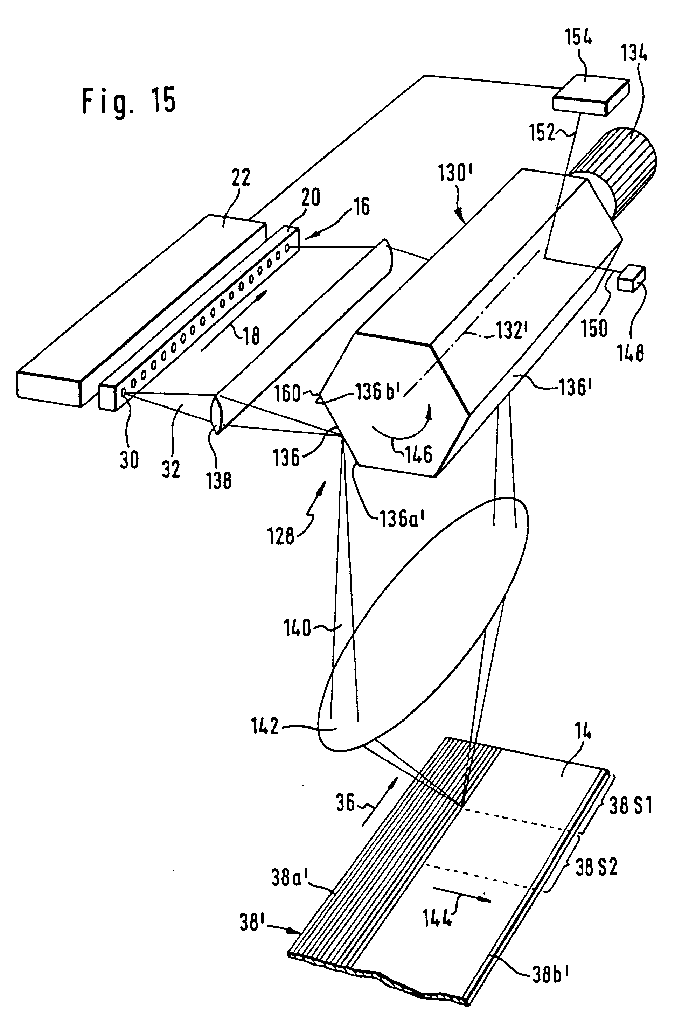

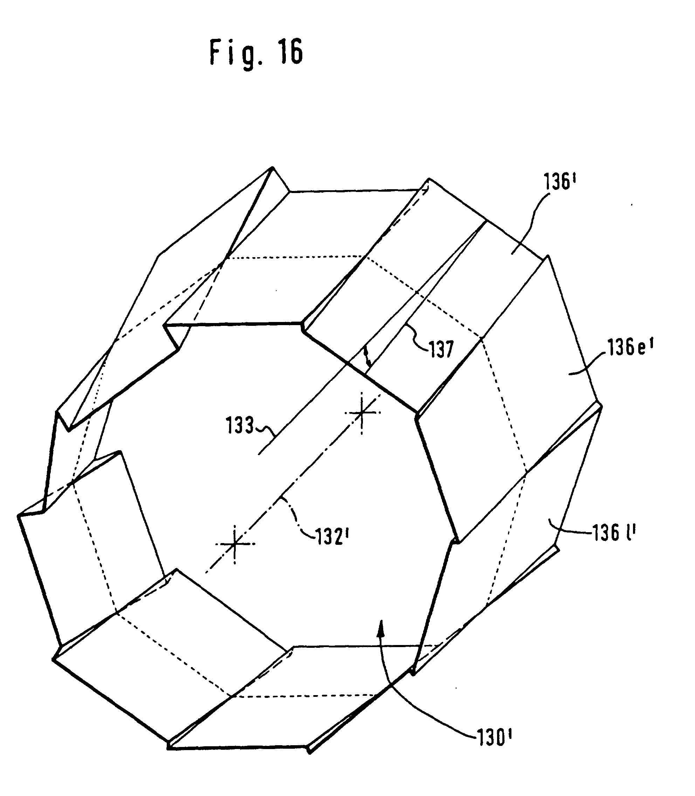

Bei einem eine Weiterentwicklung des dritten Ausführungsbeispiels gemäß Fig. 10 darstellenden fünften Ausführungsbeispiel, dargestellt in Fig. 15, kann der Kippspiegel 28a dann entfallen, wenn der Polygonspiegel 130' nicht parallel zur Achse 132' verlaufende Polygonflächen 136' aufweist, sondern, wie in Fig. 16 dargestellt, alle auf eine erste Polygonfläche 136e' aufeinanderfolgenden Polygonflächen 136' bis zur letzten Polygonfläche 1361', an die sich wieder die erste Polygonfläche 136e' anschließt, sukzessiv eine um einen konstanten Winkelwert von Polygonfläche 136' zu Polygonfläche 136' sich ändernde Neigung ihrer Mittellinie 137 gegenüber einer Parallelen 133 zur Achse 132 aufweisen, so daß diese jeweils unterschiedliche Neigung gegenüber der Achse 132 aufweisenden Polygonflächen 136' die Funktion des Kippspiegels 28a mit übernehmen.

Die erste Polygonfläche 136e' steht also dann in Reflexionsstellung, wenn die Leuchtreihe 16 den Bildfleckensatz 38S der ersten Bildreihe 38a' ausleuchten soll. Solange die erste Reflexionsfläche 136e' in Reflexionsstellung steht, erfolgt ein Erzeugen der Bildflecken 34 des ersten Bildfleckensatzes 38S in allen Bildreihen 38'.

Danach erfolgt ein Wechsel zur nächsten Polygonfläche 136', welche nunmehr gegenüber der Achse 132 so geneigt ist, daß diese den zweiten Bildfleckensatz 38S2 in unmittelbarem Anschluß an den ersten Bildfleckensatz 38S1 ausleuchtet und in ihrer Reflexionsstellung für die Erzeugung des zweiten Bildfleckensatzes 38S2 in allen Bildreihen 38' sorgt.

In gleicher Weise erfolgt dann ein Wechsel zur wiederum nächsten Polygonfläche 136', welche so geneigt ist, daß diese den dritten Bildfleckensatz 38S3 in unmittelbarem Anschluß an den zweiten Bildfleckensatz 38S2 ausleuchtet.

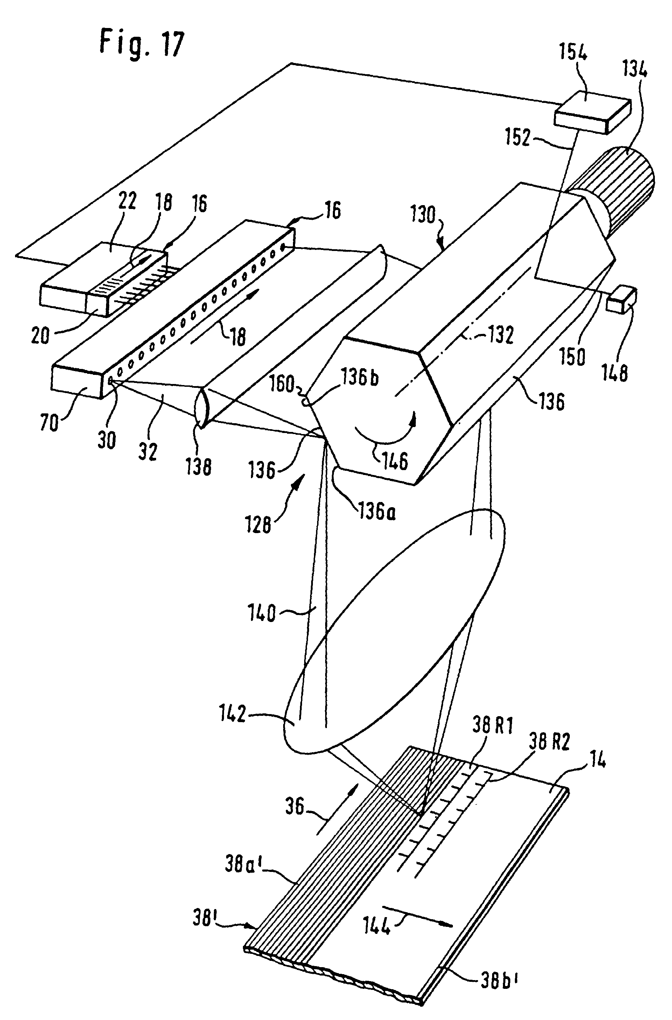

Ein sechstes Ausführungsbeispiel stellt eine Weiterentwicklung des vierten Ausführungsbeispiels dar, allerdings ebenfalls mit einer Projektionsoptik 128' mit einem Polygonspiegel gemäß Fig. 17.

Im Gegensatz zum fünften Ausführungsbeispiel sind allerdings die sich von Polygonfläche 136' zur Polygonfläche 136' verändernden Winkel der Polygonflächen 136' bezüglich der Achse 132 geringer, da beim Wechsel vom ersten Bildfleckenraster 38R1 auf das zweite Bildfleckenraster 38R2 nur eine Abweichung derart erfolgen muß, daß jeweils von den bereits erzeugten Bildflecken 34 auf die nächstbenachbarten Bildflecken 34 in jeder Bildreihe 38' gesprungen werden muß, während beim fünften Ausführungsbeispiel der zweite Bildfleckensatz 38S2 gegenüber dem ersten Bildfleckensatz 38S1 um eine Distanz verschoben werden muß, welcher der Zahl der Bildflecken in einem Bildfleckensatz 38S multipliziert mit dem Abstand der Bildflecken A entspricht, während die Verschiebung beim sechsten Ausführungsbeispiel lediglich um den Abstand der Bildflecken A erfolgen muß.

Bei den beiden vorstehend beschriebenen Ausführungsbeispielen ist pro Leuchtreihe 16 vorgesehen, daß in der Längsrichtung 18 einzelne Halbleiteremitter 20 nebeneinandersitzen und somit die Leuchtreihe 16 von einer einzigen Reihe von Halbleiteremittern 20 gebildet wird.

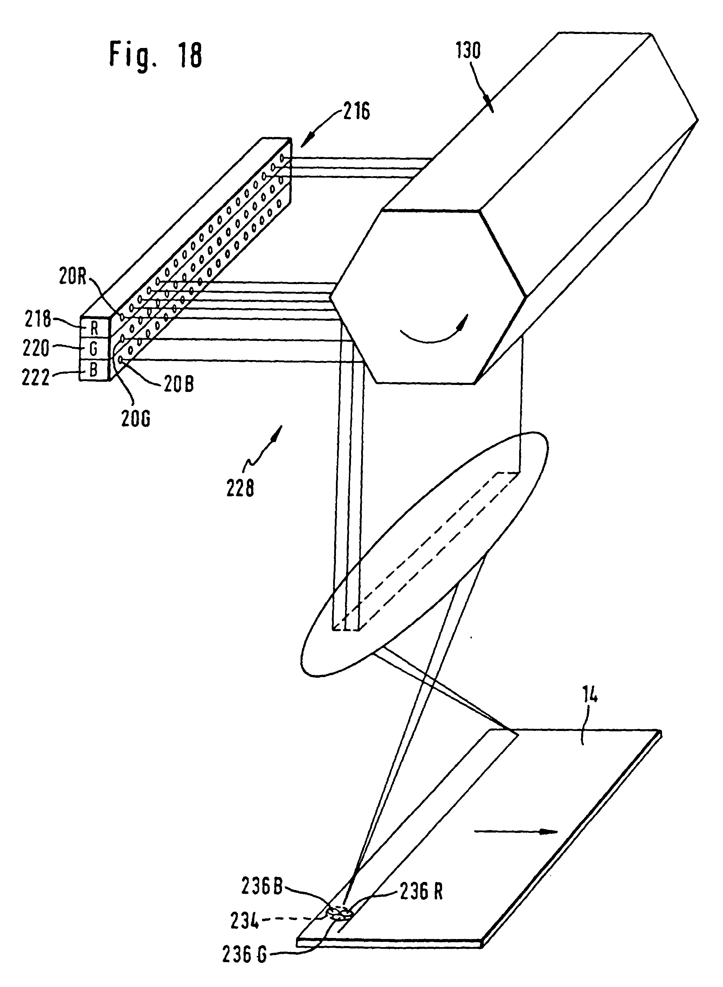

Um ein mehrfarbiges Bild zu erzeugen, ist bei einem siebten Ausführungsbeispiel, schematisch dargestellt in Fig. 18, vorgesehen, daß jede Leuchtreihe 216 drei parallel zueinander verlaufende Reihen 218, 220 und 222 von Halbleiteremittern 20 aufweist, wobei die Reihe 218 aus Halbleiteremittern 20R aufgebaut ist, die rotes Licht emittieren, die Reihe 220 aus Halbleiteremittern 20G aufgebaut ist, die grünes Licht emittieren und die Reihe 222 aus Halbleiteremittern 20B aufgebaut ist, die blaues Licht emittieren.

Die Projektionsoptik 228 ist dabei so aufgebaut, daß jeweils ein Halbleiteremitter 20R, ein Halbleiteremitter 20G und ein Halbleiteremitter 20B einen Bildfleck 234 ausleuchten, wobei im einfachsten Fall vorgesehen ist, daß die von jedem der Halbleiteremitter 20R, 20G und 20B erzeugten Teilbildflecken 236B, 236G und 236R nicht deckungsgleich übereinanderliegen, sondern sich beispielsweise gar nicht oder nur teilweise überlappen. Im einfachsten Fall kann bei einer derartigen Projektionsoptik 228 auf eine Zwischenfokussierung der Strahlung 32 auf den Polygonspiegel 130 mittels der ersten Fokussierungsoptik 138 verzichtet werden.

Im übrigen ist aber die Projektionsoptik 228 identisch ausgebildet wie die Projektionsoptik 128 des fünften oder sechsten Ausführungsbeispiels, so daß bezüglich Einzelheiten hierauf Bezug genommen wird.

Darüber hinaus erfolgt auch die Ansteuerung der Reihen 218, 220 und 222 der Halbleiteremitter 20R, 20G und 20B analog der im Zusammenhang mit dem ersten Ausführungsbeispiel beschriebenen Möglichkeiten, wobei allerdings für jede der Reihen 218, 220 und 222 ein Zwischenspeicher 50 und für jeden Halbleiteremitter 20 ein Stromsteuerblock 42 erforderlich ist, jedoch erfolgt die Ansteuerung derart, daß zu einem Ansteuerzeitpunkt t die Ansteuerparameter für die Halbleiteremitter 20R, 20G und 20B aller drei Reihen 218, 220 und 222 gleichzeitig aus dem Zwischenspeicher ausgelesen werden.

Um ein farbiges Bild zu erzeugen, werden die Wellenlängen der Halbleiteremitter 20R, 20G und 20B sowie die möglichen maximalen Intensitäten so gewählt, daß für das menschliche Auge in den Bildflecken 234 alle Farben,insbesondere auch weiß, durch Farbmischung erzeugbar sind. Hierzu sind vom Bildgenerator 54 für jeden Bildfleck 234 nun drei Ansteuerparameter für jeden der diesen Bildfleck 234 ausleuchtenden Halbleiteremitter 20R, 20G und 20B zu erzeugen.

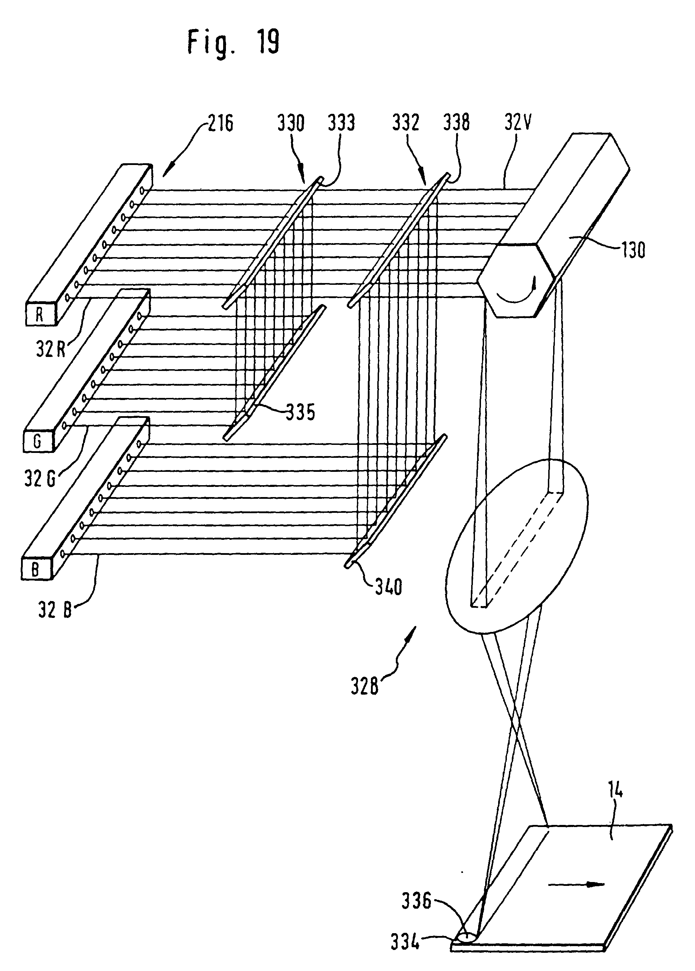

Bei einem achten, in Fig. 19 dargestellten Ausführungsbeispiel sind ebenfalls die drei Reihen 218, 220 und 222, umfassend jeweils die Halbleiteremitter 20R, 20G und 20B, vorgesehen. Die Ansteuerung derselben erfolgt ebenfalls wie im Zusammenhang mit dem dritten Ausführungsbeispiel beschrieben.

Im Gegensatz zum dritten Ausführungsbeispiel umfaßt die Projektionsoptik 328 zwischen der Leuchtreihe 216 und dem Polygonspiegel 130 jeweils zwei Spiegelsätze 330 und 332, um die Strahlung 32R der Halbleiteremitter 20R, die Strahlung 32G der Halbleiteremitter 20G und die Strahlung 32B der Halbleiteremitter 20B miteinander zu vereinigen.

Der erste Spiegelsatz 330 umfaßt einen im Strahlengang der Strahlung 32R angeordneten dichroitischen Spiegel 333 und einen die Strahlung 32G auf den dichroitischen Spiegel reflektierenden Spiegel 336. Der zweite Spiegelsatz 332 umfaßt einen im Strahlengang der Strahlung 32R angeordneten dichroitischen Spiegel 338 und einen die Strahlung 32B auf den dichroitischen Spiegel 338 reflektierenden Spiegel 340.

Durch die beiden dichroitischen Spiegel 333 und 338 wird somit die Strahlung 32R, 32G und 32B zur Strahlung 32V vereinigt, welche auf den entsprechend dem fünften oder sechsten Ausführungsbeispiel ausgebildeten Polygonspiegel 130 trifft und von diesem in bereits im Zusammenhang mit dem zweiten Ausführungsbeispiel beschriebener Weise auf die Bildfläche 14 reflektiert wird. Der Vorteil dieser Projektionsoptik 328 ist darin zu sehen, daß bei diesem Ausführungsbeispiel in jedem Bildfleck 334 die Teilbildflecken 336, erzeugt durch Abbildung der Austrittsflecken 30 der Halbleiteremitter 20R, 20G und 20B, im wesentlichen deckungsgleich übereinander gelegt werden können.

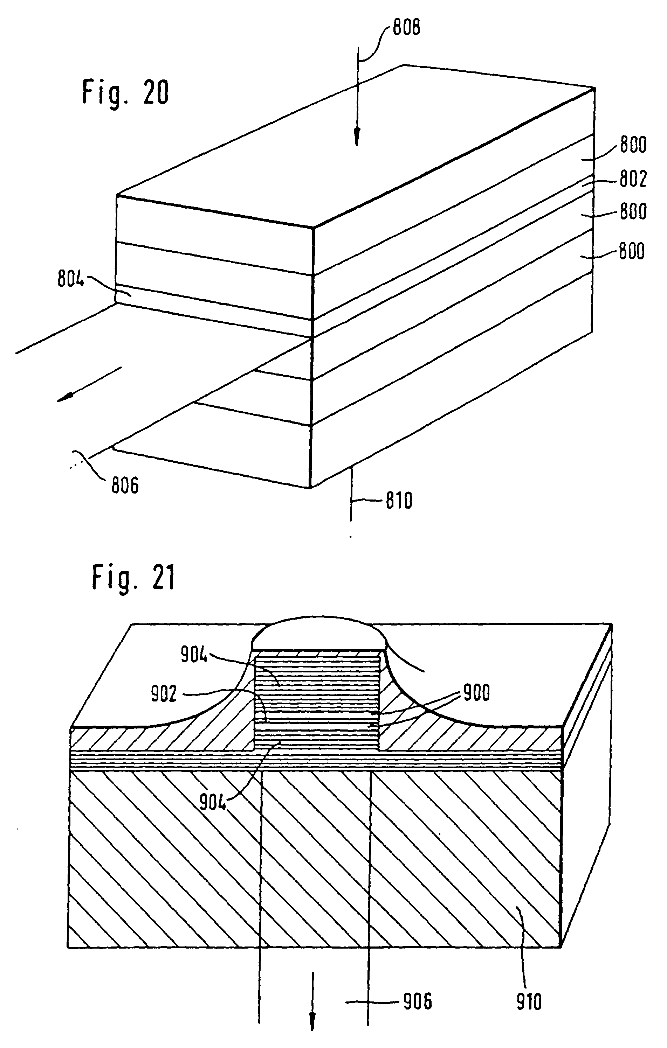

Bei allen vorstehend beschriebenen Ausführungsbeispielen der erfindungsgemäßen Vorrichtung umfassen die Halbleiteremitter als Strahlungsquellen vorzugsweise als sogenannte Kantenemitter ausgebildete Halbleiterlaser, wie in Fig. 20 schematisch dargestellt. Derartige Kantenemitter bestehen aus einer Vielzahl von Halbleiterschichten 800, zwischen denen eine laseraktive Schicht 802 angeordnet ist. Aus dieser laseraktiven Schicht tritt im Bereich eines Austrittsflecks 804 die Laserstrahlung 806 aus.

Betrieben wird ein derartiger Kantenemitter durch Stromzufuhr über zwei Stromanschlüsse 808 und 810, wobei der Strom im wesentlichen senkrecht zu den Schichten 800 und 802 fließt.

Ausführungsbeispiele derartiger Kantenemitter sind in der Zeitschrift Laser Focus World, Juli 1993, Vol. 29, No. 7, Seiten 83 bis 92 ausführlich beschrieben.

Der Vorteil dieser Kantenemitter ist darin zu sehen, daß diese in einfacher Weise nebeneinandergereiht als sogenanntes Array auf einem Substrat hergestellt werden können.

Alternativ zum Vorsehen von Kantenemittern ist es möglich, als Strahlungsquellen Halbleiterlaser in Form von sogenannten Vertikalemittern, dargestellt in Fig. 21, vorzusehen, wobei bei derartigen Vertikalemittern ebenfalls eine laseraktive Schicht 902 zwischen einer Vielzahl von Halbleiterschichten 900 vorgesehen ist und beiderseits der laseraktiven Schicht 902 zusätzliche, als Braggreflektoren dienende Schichten 904 vorgesehen sind.

Bei derartigen Vertikalemittern breitet sich die entstehende Laserstrahlung nicht wie beim Kantenemitter parallel zur aktiven Schicht 802 aus, sondern senkrecht zur aktiven Schicht 902, durchsetzt das Substrat 910 und tritt dabei vorzugsweise senkrecht zur Ebene des Substrats 910 aus.

Vertikalemitter haben den Vorteil, daß die entstehende Laserstrahlung 906 einen ungefähr kreisförmigen Querschnitt aufweist und somit in einfacher Weise eine Ankopplung an weitere optische Elemente, beispielsweise faseroptische Elemente, möglich ist.

Derartige Vertikalemitter sind beispielsweise in der Zeitschrift Optics Letters, Vol. 18, Nr. 22, Seiten 1937 ff oder in der Zeitschrift Spektrum der Wissenschaft, Januar 1992, Seiten 76 ff beschrieben. Auf diese Beschreibung wird vollinhaltlich Bezug genommen.

Als Lasermaterialien kommen vorzugsweise für die Erzeugung von Strahlung im sichtbaren Bereich bei unterschiedlichen Farben folgende Lasermaterialien zum Einsatz:

| | | |
|---|---|---|
| AlₓGa_{y}In_{1-x-y}P auf GaAs | für 610-690 nm | rot |
| Zn₁₋ₓMgₓS_{1-y}Se_{y} auf GaAs | für 450-550 nm | blau, grün |
| AlₓGa_{y}In_{1-x-y}N | für | UV - rot |

Alternativ dazu besteht die Möglichkeit, andere bisher bekannte Lasermaterialien zu verwenden und die Wellenlänge des erzeugten Lichts zu verdoppeln. Derartige Materialien wären beispielsweise

| | | |
|---|---|---|
| A1ₓGa₁₋ₓAs auf GaAs | (780-880nm) | für blau |
| InₓGa₁₋ₓAs auf GaAs | (880-1100nm) | für blau, grün |
| In₁₋ₓGaₓAs_{y}P_{1-y} auf InP | (1100-1600nm) | für rot. |

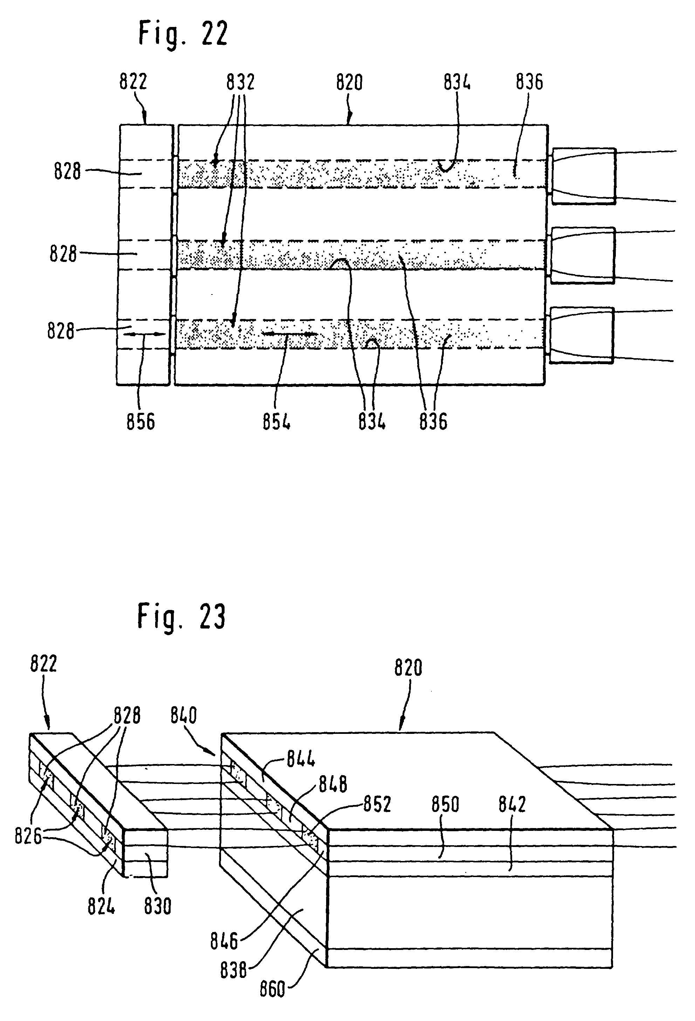

Ein Ausführungsbeispiel von derartigen, die Wellenlänge der Strahlung der Strahlungsquelle verdoppelnden Halbleiteremittern 20', in Fig. 22 und 23 in Form eines Ausschnitts aus der Leuchtreihe 820 dargestellt, umfaßt ein Array 822 von auf einem gemeinsamen Substrat 824 angeordneten Kantenemittern 826, die durch spezielle auf dem gemeinsamen Substrat 824 angeordnete laseraktive Schichten gebilde6 sind und jeweils als laseraktive Schicht 802 einen streifenförmigen Bereich 828 einer auf dem gemeinsamen Substrat 824 angeordneten durchgehenden Schicht 830 aufweisen.

Jedem der als Strahlungsquelle dienenden Halbleiterlaser 826 ist jeweils ein Frequenzverdoppler 832 zugeordnet, welcher jeweils eine Wellenleiterstruktur 834 umfaßt, in welcher ein frequenzverdoppeltes Medium als Wellenleiterkanal 836 angeordnet ist.

Die Wellenleiterstruktur 834 führt dabei die von dem jeweiligen Halbleiterlaser 826 erzeugte Strahlung in einem derart verengten Querschnitt, so daß eine Leistungsdichte von mindestens 10⁵W/cm², vorzugsweise mindestens 10⁶W/cm², die für eine effiziente Frequenzverdopplung in dem frequenzverdoppelnden Medium erforderlich ist, erreicht wird.

Bei dem in Fig. 22 und 23 dargestellten Ausführungsbeispiel sind alle Frequenzverdoppler 832 ebenfalls auf einem gemeinsamen Substrat 838 in Form eines Arrays 840 angeordnet.

Die Wellenleiterstruktur 834 wird dabei gebildet durch eine Basisschicht 842 sowie eine Deckschicht 844, welche obere und untere Wände des Wellenleiterkanals 834 darstellen, sowie im Abstand voneinander angeordneten Streifenbereiche 846 und 848 einer Zwischenschicht 850, welche seitliche Wände des Wellenleiterkanals 834 bilden und einen Streifenbereich 852 des Zwischenschicht 850 zwischen sich einschließen, welcher das als Wellenleiterkern dienende frequenzverdoppelnde Medium 836 bildet.

Die Basisschicht 842, die Deckschicht 844 sowie die streifenförmigen Bereiche 846 und 848 der Zwischenschicht 850 weisen einen Brechungsindex auf, welcher kleiner als der Brechungsindex des streifenförmigen Bereichs 852 ist, so daß an den Grenzen zwischen dem streifenförmigen Bereich 852 und den Schichten 842 sowie 844 sowie den streifenförmigen Bereichen 846 und 848 eine Totalreflexion der Strahlung und somit die Führung der Strahlung in der Wellenleiterstruktur 834 erfolgt.

Vorzugsweise sind die Halbleiteremitter 20' so aufgebaut, daß sich an das Array 822 von Halbleiterlasern 826 das Array 840 von Frequenzverdopplern 832 unmittelbar anschließt, so daß die Strahlung aus den laseraktiven Schichten 828 unmittelbar in die Wellenleiterkanäle 834 übertritt.

Zweckmäßigerweise ist dabei die Ausdehnung der Wellenleiterstrukturen 834 quer zu ihrer Längsrichtung 854 ungefähr gleich groß gewählt wie die Ausdehnung der laseraktiven Bereiche 828 in Ausbreitungsrichtung 856 der Laserstrahlung.

Um in dem frequenzverdoppelnden Medium 836 eine effiziente Frequenzverdopplung zu erhalten, müssen die Grundwelle, das heißt die aus dem entsprechenden Halbleiterlaser 826 kommende Strahlung, und die verdoppelte Strahlung während des gesamten Weges durch das frequenzverdoppelnde Medium in Phase bleiben. Dies ist optimal dann erreicht, wenn mit einer unkritischen oder nicht kritischen Phasenanpassung gearbeitet wird, bei welcher der Winkel 0 oder 90° beträgt.

Dies ist nur bei wenigen Wellenlängen möglich. Eine Anpassung an die entsprechende Wellenlänge erfolgt bei dem jeweiligen Material vorzugsweise durch eine Variation der Temperatur, so daß beispielsweise das Substrat 838 auf einer Temperiervorrichtung 860 sitzt, mit welcher das gesamte Array 840 von Frequenzverdopplern 832 auf eine für die unkritische Phasenanpassung optimale Temperatur bringbar und auf dieser haltbar ist.

Die unkritische oder nichtkritische Phasenanpassung ist in dem Buch von W. Koechner "Solid State Laser Engineering" ausführlich beschrieben, so daß diesbezüglich vollinhaltlich auf diese Literaturstelle Bezug genommen wird.

Vorzugsweise ist die Temperiervorrichtung 860 mit einer Steuerung versehen, über welche eine vorgebbare Temperatur eingestellt und durch Nachregelung aufrecht erhalten werden kann.

Zweckmäßigerweise wird die Kristallrichtung in dem frequenzverdoppelnden Medium 836 durch die Ausrichtung des Substrats 838 vorgegeben, welches so orientiert wird, daß die optische Achse des Substrats in der gewünschten Richtung zur Längsrichtung 854 des Wellenleiterkanals 834 ausgerichtet ist. Läßt man auf dieses Substrat 838 die Schichten 842, 844 und 850 aus demselben Basismaterial, gegebenenfalls mit unterschiedlichen Dotierungen, aufwachsen, so haben diese Schichten die gleiche Ausrichtung der optischen Achsen wie das Substrat 838 und folglich ist damit auch die Lage der optischen Achsen im frequenzverdoppelnden Medium 836 vorgebbar.

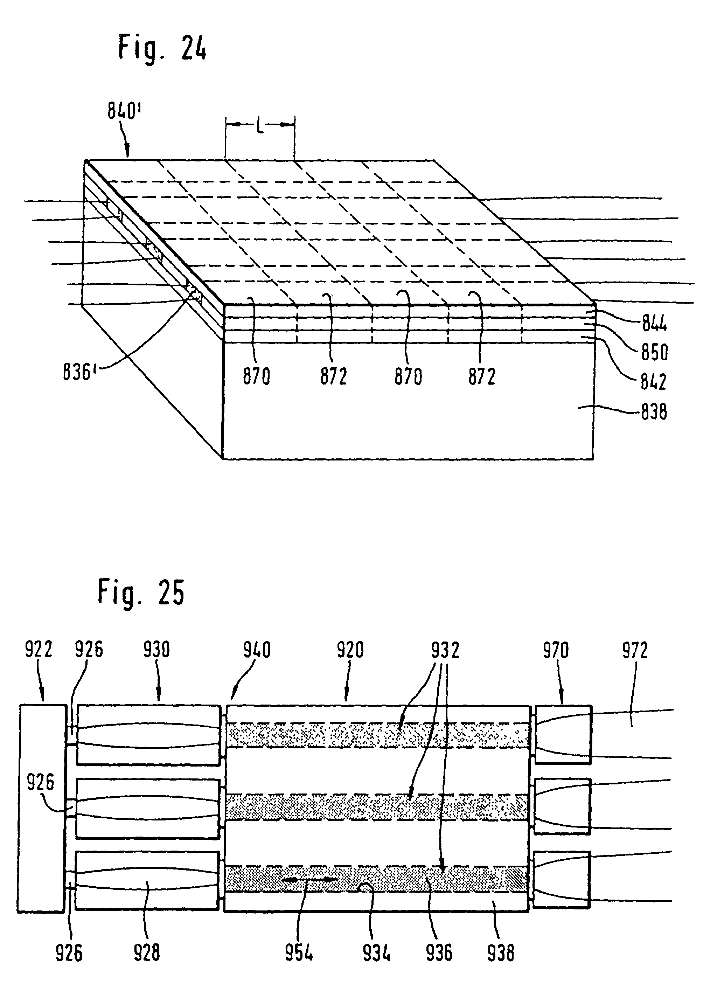

Bei einer Variante 840' des Arrays 840 von Frequenzverdopplern 832, dargestellt in Fig. 24, wird nicht mit einer unkritischen Phasenanpassung gearbeitet, sondern die Phasenanpassung wird dadurch erreicht, daß in dem frequenzverdoppelnden Medium 836' Domänen 870 und 872 aufeinanderfolgen, in welchen die nichtlinearen Koeffizienten des frequenzverdoppelnden Mediums 836 jeweils umgekehrte Vorzeichen aufweisen.

Eine Erstreckung L der Domänen 870 und 872 in der Längsrichtung 854 der Wellenleiterkanäle 834 ist dabei so abzustimmen, daß sie der Kohärenzlänge entspricht.

Mit einer derartigen Quasiphasenanpassung läßt sich außerhalb der idealen Phasenanpassung eine Phasenanpassung bei Frequenzverdopplung erreichen, die eine ausreichende Intensität der frequenzverdoppelten Strahlung gewährleistet.

Die Quasiphasenanpassung ist in der Zeitschrift Optics Letters Vol. 17, Nr. 11, Seiten 795 bis 797, in der Zeitschrift Applied Physics Letters 56 (2) Seiten 108 bis 110 oder in dem IEEE Journal of Quantum Electronics Vol. 28, Nr. 11, Seite 2631 bis 2654 ausführlich beschrieben.

Im übrigen ist das Array 840' gleich ausgebildet wie das Array 840, so daß auf die Ausführungen hierzu vollinhaltlich Bezug genommen werden kann und für die gleichen Elemente auf die gleichen Bezugszeichen Verwendung finden.

Vorzugsweise kommt im Falle der unkritischen Phasenanpassung als frequenzverdoppelndes Medium ein Kristall aus Lithiumniobat für die Wellenlänge Grün und Rot zum Einsatz und für die Wellenlänge Blau ein Kristall aus Kaliumniobat.

Die Wellenleiterstruktur 834 wird dadurch erzeugt, daß das den Wellenleiterkern umgebende Material Lithiumniobat oder Kaliumniobat ist, das zusätzlich mit Magnesium oder anderen brechungsindexerniedrigenden Elementen dotiert wurde.

Bei einem zweiten Ausführungsbeispiel von mehreren erfindungsgemäßen und zu einer Leuchtreihe 920 zusammengefaßten Halbleiteremittern 20' dargestellt in Fig. 25, findet ein Array 922 von als Vertikalemitter ausgebildeten Halbleiterlasern 926 Verwendung. Die Strahlung 928 dieser Halbleiteremitter wird durch fokussierende Elemente 930 auf Frequenzverdoppler 932 fokussiert, die ebenfalls in einem Array 940 auf einem gemeinsamen Substrat angeordnet und in gleicher Weise ausgebildet und aufgebaut sind wie das Array 840, so daß auf die Ausführungen hierzu vollinhaltlich Bezug genommen werden kann. Die fokussierende Optik 930 ist dabei nicht als Linsenoptik ausgebildet, sondern als Gradientenindex-Linsen, welche als Block zwischen den jeweiligen Halbleiterlasern 926 und den entsprechenden Frequenzverdopplern 932 eingesetzt sind und aufgrund des Gradientenindex die Strahlung 928 auf die Wellenleiterkanäle 934 fokussieren.

Darüber hinaus sind vorzugsweise endseitig der Frequenzverdoppler 932 Aufweitungsoptiken 970 angeordnet, welche ebenfalls Gradientenindex-Linsen sind, welche ein im wesentlichen paralleles Strahlenbündel 972 erzeugen.

Bei einem dritten Ausführungsbeispiel von mehreren erfindungsgemäßen und zu einer Leuchtreihe 1020 zusammengefaßten Halbleiteremittern ist ein Array 1022 von als Kantenemittern ausgebildeten einzelnen Halbleiterlasern 1026 auf dem gemeinsamen Substrat 1024 angeordnet, wobei auf dem gemeinsamen Substrat 1024 einzelne laseraktive Schichten gebildet sind, die jeweils als laseraktive Schicht 1002 einen streifenförmigen Bereich auf einer auf dem gemeinsamen Substrat 1024 angeordneten durchgehenden Schicht aufweisen.

Das Substrat 1024 sitzt dabei auf einem Kühlelement 1050 und ist thermisch mit einem Temperatursensor 1052 gekoppelt, welche über eine Temperaturregelung 1054 das Kühlelement 1050 auf eine konstante Temperatur regelt, so daß letztendlich auch das Substrat 1024 der Halbleiteremitter 1026 eine konstante Temperatur aufweist.

In gleicher Weise ist ein Kühlelement 1056 für den Frequenzverdoppler 1032 vorgesehen, wobei die Basisschicht 1042 durch das Kühlelement 1056 gekühlt ist. Ferner ist mit dieser Basisschicht 1042 ein Temperatursensor 1058 gekoppelt, welcher ebenfalls wieder mit der Temperaturregelung 1054 die Möglichkeit schafft, eine konstante Temperatur der Basisschicht 1042 einzustellen, so daß letztlich auch in dem Wellenleiterkanal eine konstante Temperatur für das frequenzverdoppelnde Medium 1036 vorliegt.

Vorzugsweise erfolgt die Abbildung der Austrittsflecken 1060 der Kantenemitter 1026 über ein Linsensystem 1062 auf die Eintrittsflecken 1064 der Wellenleiterstruktur und deren Austrittsflecken 1066 werden wiederum über ein Linsensystem 1068 zur parallelen, den jeweiligen Halbleiteremitter 1020 verlassenden Strahlung 32 geformt, wobei die Strahlung ein Fenster 1070 eines Gehäuses 1072 durchsetzt, das seinerseits sowohl das Array 1022 als auch die Gesamtheit der Wellenleiterstrukturen 1034 mit den Kühlelementen 1050 und 1056 sowie den Temperatursensoren 1052 und 1058 sowie die Linsen 1062 und 1066 umfaßt.

Ferner ist noch vor dem Austrittsfenster 1070 ein Strahlteiler 1074 vorgesehen, welcher einen Teil der das Außenfenster 1070 durchsetzenden Strahlung auf eine Monitorfotodiodenreihe 1076 reflektiert, die ebenfalls in dem Gehäuse 1072 angeordnet ist und für jeden der Kantenemitter 1026 ein Monitorfotodiode aufweist. Alle Monitorfotodioden sind mit der Steuerung 22' gekoppelt, die bereits im Zusammenhang mit dem dritten Ausführungsbeispiel der erfindungsgemäßen Steuerung gemäß Fig. 6 ausführlich beschrieben wurde.

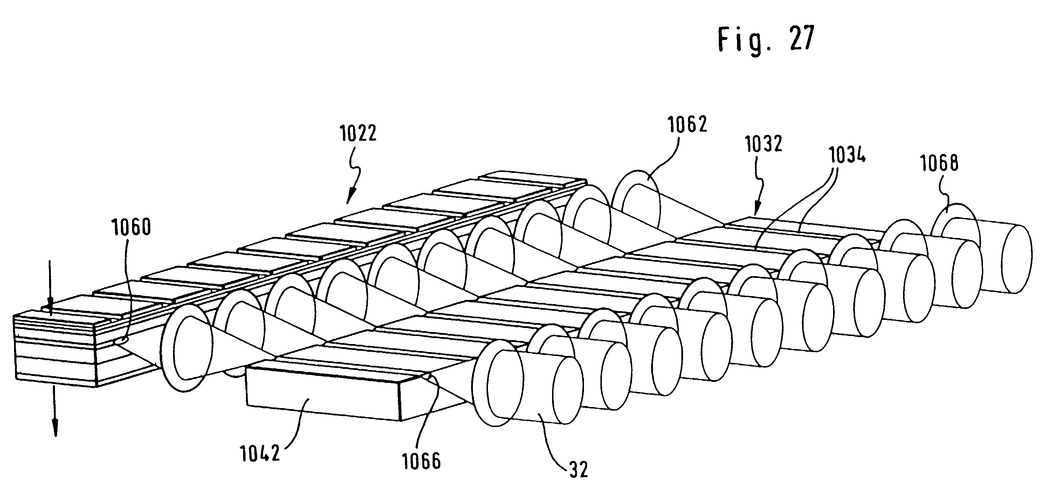

Besonders vorteilhaft ist es dabei, wenn wie in Fig. 27 dargestellt, die Linsensysteme 1062 und 1068 jeweils die Strahlung formende Mikrolinsensysteme umfassen, die ebenfalls auf einem Substrat angeordnet sind. Ferner ist in Fig. 27 nochmals die Wellenleiterstruktur des Frequenzverdopplers 1032 vergrößert dargestellt.

## Patentansprüche

1. Vorrichtung zur Erzeugung eines insbesondere für ein menschliches Auge sichtbaren Bildes in einer Bildfläche, umfassend eine Strahlungsquelle (20), welche über eine Projektionsoptik (28, 128, 228, 328) ein Bild dadurch erzeugt, daß sie während eines Bildaufbauzyklus (12) mindestens eine Bildreihe (38) durch Ausleuchten einzelner nebeneinanderliegender Bildflecken (34) aufbaut und den Bildaufbauzyklus periodisch wiederholt, wobei zur Ausleuchtung der Bildflecken (34) der Bildreihe (38) eine eine Vielzahl von Halbleiteremittern (20) umfassende Leuchtreihe (16) vorgesehen ist, die Projektionsoptik (28, 128, 228, 328) jeden Austrittsfleck (30) für die Strahlung (32) jedes Halbleiteremitters mindestens einem der Bildflecken (34) zuordnet, und wobei die Projektionsoptik (28, 128, 228, 328) die Austrittsflecken (30) aller Halbleiteremitter (20) der Leuchtreihe gleichzeitig auf die diesen zugeordneten Bildflecken (34) abbildet
**dadurch gekennzeichnet, daß** die Projektionsoptik (28, 128, 228, 328) nebeneinander liegende Austrittsflecken (30) der Leuchtreihe (16) auf eine als Bildfleckenraster (38R) ausgebildete Bildfleckenserie mit einem Bildfleckenrasterabstand (BR) abbildet, der jeweils ein bestimmtes Vielfaches des Abstandes (A) nebeneinander liegender Bildflecken (34) der Bildreihe (38) beträgt.

2. Vorrichtung nach Anspruch 1, **dadurch gekennzeichnet, daß** der Bildfleckenrasterabstand (BR) ein ganzzahliges Vielfaches des Abstandes (A) nebeneinander liegender Bildflecken (34) der Bildreihe (38) beträgt.

3. Vorrichtung nach Anspruch 1 oder 2, **dadurch gekennzeichnet, daß** die Vorrichtung eine Spreizoptik (70) umfaßt, welche den Abstand zwischen nebeneinanderliegenden Austrittsflecken (30) der Leuchtreihe (16) auf einen Rasterabstand (R) abbildet, der nach Abbildung durch die Projektionsoptik (28, 128, 228, 328) in dem Bild den Bildfleckenrasterabstand (BR) ergibt.

4. Vorrichtung nach Anspruch 3, **dadurch gekennzeichnet, daß** die Spreizoptik (70) den Abstand zwischen nebeneinanderliegenden Austrittsflecken der Leuchtreihe auf den Rasterabstand (R) vergrößert.

5. Vorrichtung nach Anspruch 3 oder 4, **dadurch gekennzeichnet, daß** die Spreizoptik (70) die aus den Austrittsflecken (30) austretende Strahlung (32) auf parallele im Rasterabstand (R) zueinander verlaufende Strahlenbündel abbildet.

6. Vorrichtung nach einem der Ansprüche 3 bis 5, **dadurch gekennzeichnet, daß** die Spreizoptik (70) mehrere Prismenelemente (82, 84) umfaßt und daß die Prismenelemente (82, 84) aus der Spreizoptik (70) austretende Strahlenbündel (32) erzeugen, welche den Rasterabstand (R) aufweisen.

7. Vorrichtung nach einem der Ansprüche 3 bis 6, **dadurch gekennzeichnet, daß** die Spreizoptik (70) ein Reflexionsgitter (90) umfaßt, dessen Reflexionsflächen (92) in Einfallsrichtung (94) der von den Halbleiteremittern (20) kommenden Strahlung (32) den bestimmten Rasterabstand (R) aufweisen.

8. Vorrichtung nach Anspruch 7, **dadurch gekennzeichnet, daß** die Spreizoptik (70) für jeden der Austrittsflecken (30) einen Lichtleiter (74) umfaßt und daß in die Lichtleiter (74) an einem Ende (76) die Strahlung aus den jeweiligen Austrittsflecken (30) der Halbleiteremitter (20) eintritt und daß die Lichtleiter (74) mit dem anderen Ende (78) in dem vorbestimmten Rasterabstand (R) angeordnete Lichtleiteraustrittsflecken (80) festlegen.

9. Vorrichtung nach Anspruch 8, **dadurch gekennzeichnet, daß** für die Spreizoptik (70) als Lichtleiter auf einem Substrat (72) angeordnete Lichtleiterpfade (74) vorgesehen sind.

10. Vorrichtung nach einem der voranstehenden Ansprüche,
**dadurch gekennzeichnet, daß** die Projektionsoptik (28, 128, 228, 328) während des Bildaufbauzyklus unterschiedliche Austrittsflecken (30) auch unterschiedlichen Bildflecken (34) der Bildreihe zuordnet.

11. Vorrichtung nach einem der voranstehenden Ansprüche,
**dadurch gekennzeichnet, daß** die Projektionsoptik (28, 128, 228, 328) während jedes Bildaufbauzyklus dieselben Austrittsflecken (30) denselben Bildflecken (34) der Bildreihe (38) zuordnet.

12. Vorrichtung nach einem der voranstehenden Ansprüche,
**dadurch gekennzeichnet, daß** die Vielzahl der Halbleiteremitter (20) kleiner ist als die Gesamtzahl der Bildflecken (34) der Bildreihe (38) und daß die Projektionsoptik (28, 128, 228, 328) die Austrittsflecken während des Bildaufbauzyklus zu aufeinanderfolgenden Zeitpunkten auf verschiedene Bildfleckenserien (38S, 38R) der Bildreihe (38) abbildet.

13. Vorrichtung nach einem der voranstehenden Ansprüche,
**dadurch gekennzeichnet, daß** die Projektionsoptik (28, 128, 228, 328) zur Erzeugung der Bildreihe (38) die von der Leuchtreihe (16) kommende Strahlung (32) sukzessive nacheinander auf verschiedene Bildfleckenserien (38R) abbildet.

14. Vorrichtung nach Anspruch 13, **dadurch gekennzeichnet, daß** die Projektionsoptik (28, 128, 228, 328) ein strahlumlenkendes Element (28a) umfaßt, welches die von der Leuchtreihe (16) kommende Strahlung (32) in die aufeinanderfolgenden Bildfleckenserien (38R) abbildet.

15. Vorrichtung nach Anspruch 14, **dadurch gekennzeichnet, daß** das strahlumlenkende Element ein bewegbares Reflexionselement (28a) ist.

16. Vorrichtung nach Anspruch 15, **dadurch gekennzeichnet, daß** das Reflexionselement (28a) in definierte Winkelpositionen bewegbar ist, die die von der Leuchtreihe (16) kommende Strahlung (32) in jeweils eine der Bildfleckenserien (38R) abbilden.

17. Vorrichtung nach Anspruch 16, **dadurch gekennzeichnet, daß** das strahlumlenkende Element durch einen um eine Achse (28c) verschwenkbaren Spiegel (28a) gebildet ist.

18. Vorrichtung nach Anspruch 17, **dadurch gekennzeichnet, daß** sich der Spiegel (28a) während des Bildaufbauzyklus kontinuierlich bewegt.

19. Vorrichtung nach Anspruch 17, **dadurch gekennzeichnet, daß** der Spiegel (28a) während des Bildaufbauzyklus einzelne definierte Stellungen durchläuft.

20. Vorrichtung nach einem der voranstehenden Ansprüche,
**dadurch gekennzeichnet, daß** die Projektionsoptik (28, 128, 228, 328) während des Bildaufbauzyklus das Bild aus mehreren nebeneinander liegenden Bildreihen (38') aufbaut.

21. Vorrichtung nach Anspruch 20, **dadurch gekennzeichnet, daß** die Projektionsoptik (28, 128, 228, 328) die Bildflecken (34) einer Bildfleckenserie (38S, 38R) in jeder Bildreihe (38') erzeugt und dann die nächste Bildfleckenserie (38R) in jeder Bildreihe (38') erzeugt.

22. Vorrichtung nach Anspruch 20 oder 21, **dadurch gekennzeichnet, daß** die Projektionsoptik ein strahlumlenkendes Element (130) umfaßt, welches die Bildfleckenserien (38R), in den aufeinanderfolgenden Bildreihen (38) erzeugt.

23. Vorrichtung nach Anspruch 22, **dadurch gekennzeichnet, daß** das strahlumlenkende Element ein bewegbares Reflexionselement (130) ist.

24. Vorrichtung nach Anspruch 23, **dadurch gekennzeichnet, daß** das Reflexionselement (130) in definierte Winkelpositionen bewegbar ist, die die Bildfleckenserien (38R) in jeder der Bildreihen (38') erzeugen.

25. Vorrichtung nach einem der Ansprüche 14 bis 24, **dadurch gekennzeichnet, daß** das strahlumlenkende Element durch einen um eine Drehachse (132) rotierenden Polygonspiegel (130) gebildet ist.

26. Vorrichtung nach Anspruch 25, **dadurch gekennzeichnet, daß** der Polygonspiegel (130) mit jeder Polygonfläche (136) die von der Leuchtreihe (16) kommende Strahlung so reflektriert, daß diese die Zahl der nebeneinander liegenden Bildreihen durch Drehung in einem bestimmten Winkelbereich durchläuft und dann zur nächsten Polygonfläche (136) übergeht.

27. Vorrichtung nach Anspruch 25 oder 26, **dadurch gekennzeichnet, daß** der Polygonspiegel (130') Spiegelflächen (136') aufweist, die jeweils gegenüber einer Parallelen (133) zur Drehachse (132) um einen unterschiedlichen Winkel geneigt sind, so daß jede Spiegelfläche (136') eine Bildfleckenserie (38R) in allen Bildreihen (38R) des Bildes erzeugt.

28. Vorrichtung nach einem der Ansprüche 14 bis 27, **dadurch gekennzeichnet, daß** die Projektionsoptik (28) die Strahlung der Halbleiteremitter (20) der Leuchtreihe (16) im wesentlichen auf das strahlumlenkende Element (130) fokussiert.

29. Vorrichtung nach einem der voranstehenden Ansprüche,
**dadurch gekennzeichnet, daß** die Projektionsoptik (28, 128, 228, 328) geringe Abstände voneinander aufweisende Bildflecken (34) erzeugt.

30. Vorrichtung nach Anspruch 29, **dadurch gekennzeichnet, daß** die Bildflecken (34) im wesentlichen aneinander angrenzen.

31. Vorrichtung nach einem der voranstehenden Ansprüche,
**dadurch gekennzeichnet, daß** die Projektionsoptik (228, 328) die Strahlung 32R, 32G, 32B) der drei, mit unterschiedlicher Wellenlänge strahlenden Halbleiteremitter (20R, 20G, 20B) zu einem Strahlenbündel (32V) vereinigt.

32. Vorrichtung nach einem der voranstehenden Ansprüche,
**dadurch gekennzeichnet, daß** die Halbleiteremitter (20) die Strahlung (32) im Zeitraum zwischen zwei aufeinanderfolgenden Ansteuerzeitpunkten (t₁, t₂ ...) emittieren.

33. Vorrichtung nach Anspruch 32, **dadurch gekennzeichnet, daß** die Ansteuerzeitpunkte (t₁, t₂,...)in konstanten Zeitabständen aufeinanderfolgen.

34. Vorrichtung nach Anspruch 28 oder 29, **dadurch gekennzeichnet, daß** die Halbleiteremitter (20) die Strahlung (32) mit variabel einstellbarer Intensität emittieren.

35. Vorrichtung nach Anspruch 34, **dadurch gekennzeichnet, daß** die Halbleiteremitter (20) zwischen zwei Ansteuerzeitpunkten (t₁, t₂,...) die Strahlung (32) mit der eingestellten Intensität im wesentlichen unverändert emittieren.

36. Vorrichtung nach Anspruch 34 oder 35, **dadurch gekennzeichnet, daß** die Einstellung der Intensität der Strahlung (32) jedes Halbleiteremitters (20) zu jedem Ansteuerzeitpunkt (t₁, t₂,...) erfolgt.

37. Vorrichtung nach einem der Ansprüche 32 oder 33, **dadurch gekennzeichnet, daß** die Halbleiteremitter (20) zwischen den Ansteuerzeitpunkten (t₁, t₂,...) entweder Strahlung (32) mit maximaler Intensität, aber variabel einstellbarer Zeitdauer (△t₁, △t₂, ...) oder keine Strahlung emittieren.

38. Vorrichtung nach Anspruch 37, **dadurch gekennzeichnet, daß** die Einstellung einer mittleren, von einem Beobachter wahrgenommenen Intensität durch Modulation der Zeitdauer (△t₁, △t₂, ...) der Emission der Strahlung (32) erfolgt.

39. Vorrichtung nach Anspruch 37 oder 38, **dadurch gekennzeichnet, daß** die Einstellung der Zeitdauer (△t₁, △t₂,...) der Emission der Strahlung (32) zu jedem Ansteuerzeitpunkt (t₁, t₂,...) erfolgt.

40. Vorrichtung nach einem der voranstehenden Ansprüche,
**dadurch gekennzeichnet, daß** jeder Bildfleck (34) durch einen einzigen Halbleiteremitter (20) ausleuchtbar ist.

41. Vorrichtung nach einem der Ansprüche 1 bis 39, **dadurch gekennzeichnet, daß** jeder Bildfleck (34) durch drei Halbleiteremitter (20R, 20G, 20B) ausleuchtbar ist, von denen jeder Strahlung (32R, 32G, 32B) mit einer derartigen Wellenlänge emittiert, daß durch Überlagerung der Strahlung der drei Halbleiteremitter (20R, 20G, 20B) weißes Licht erzeugbar ist.

42. Vorrichtung nach Anspruch 41, **dadurch gekennzeichnet,**
**daß** die drei, jeweils einen Bildfleck (34) ausleuchtenden Halbleiteremitter (20R, 20G, 20B) gleichzeitig ansteuerbar sind.

43. Vorrichtung nach einem der voranstehenden Ansprüche,
**dadurch gekennzeichnet, daß** die Leuchtreihe (16) mindestens eine Reihe von Halbleiteremittern (20) aufweist, die Strahlung derselben Wellenlänge emittieren.

44. Vorrichtung nach Anspruch 43, **dadurch gekennzeichnet, daß** zur Ausleuchtung der Bildflecken (34) einer Bildreihe (38) die entsprechende Leuchtreihe (16) drei parallel zueinander verlaufende Reihen (218, 220, 222) von Halbleiteremittern (20R, 20G, 20B) umfaßt, wobei die Halbleiteremitter (20R, 20G, 20B) jeder Reihe Strahlung im wesentlichen derselben wellenlange emittieren.

45. Vorrichtung nach einem der voranstehenden Ansprüche,
**dadurch gekennzeichnet, daß** zur gleichzeitigen
Ansteuerung mehrere (50) Halbleiteremitter (20) ein Zwischenspeicher vorgesehen ist, aus welchem die Ansteuerparameter zur gleichzeitigen Ansteuerung der mehreren Halbleiteremitter (20) parallel auslesbar sind.

46. Vorrichtung nach einem der voranstehenden Ansprüche,
**dadurch gekennzeichnet, daß** einer der Halbleiteremitter (820, 920) eine Halbleiterstrahlungsquelle (826, 926) und einen Frequenzverdoppler (832, 932) für die von der Halbleiterstrahlungsquelle emittierte Strahlung umfaßt.

47. Vorrichtung nach Anspruch 46, **dadurch gekennzeichnet,**
**daß** der Frequenzverdoppler (832, 932) eine die Strahlung jeder Strahlungsquelle (826, 926) mit einer
Leistungsdichte von mindestens 10⁵W/cm² komprimiert führende Wellenleiterstruktur (834, 934) und ein in der Wellenleiterstruktur (834, 934) angeordnetes frequenzverdoppelndes Medium (836, 936) umfaßt.

48. Vorrichtung nach Anspruch 46 oder 47, **dadurch gekennzeichnet, daß** die Frequenzverdoppler (832) sich unmittelbar an die Strahlungsquellen (826) anschließen.

49. Vorrichtung nach Anspruch 46 oder 47, **dadurch gekennzeichnet, daß** zwischen jeder Strahlungsquelle (926) und jedem Frequenzverdoppler (932) eine die Strahlung in die Wellenleiterstruktur (934) fokussierende Optik (930) angeordnet ist.

50. Vorrichtung nach einem der Ansprüche 46 bis 49, **dadurch gekennzeichnet, daß** die Strahlungsquellen (826, 926) einer Leuchtreihe (16) in einer Reihe angeordnet sind und die Frequenzverdoppler (832, 932) der Leuchtreihe (16) ausgangsseitig der Strahlungsquellen (826, 926) in ebenfalls einer Reihe angeordnet sind.

51. Vorrichtung nach einem der Ansprüche 46 bis 50, **dadurch gekennzeichnet, daß** mehrere der Strahlungsquellen (826) auf einem gemeinsamen Substrat (834) angeordnet sind.

52. Vorrichtung nach einem der Ansprüche 46 bis 51, **dadurch gekennzeichnet, daß** mehrere der Frequenzverdoppler (832, 932) auf einem gemeinsamen Substrat (838) angeordnet sind.

53. Vorrichtung nach einem der Ansprüche 46 bis 52, **dadurch gekennzeichnet, daß** jede Wellenleiterstruktur (834, 934) jedes Frequenzverdopplers (832, 932) ein "single mode" Wellenleiter ist.

54. Vorrichtung nach einem der Ansprüche 46 bis 53, **dadurch gekennzeichnet, daß** jede Wellenleiterstruktur (834, 934) durch ein das den Wellenleiterkern bildende frequenzverdoppelnde Medium (836, 936) umgebende und einen niedrigeren Brechungsindex als der Wellenleiterkern aufweisende Wandmaterial gebildet ist.

55. Vorrichtung nach Anspruch 54, **dadurch gekennzeichnet, daß** das Wandmaterial auf demselben Material wie das frequenzverdoppelnde Medium (836, 936) basiert und aufgrund unterschiedlicher Dotierung einen niedrigeren Brechungsindex als dieses aufweist.

56. Vorrichtung nach Anspruch 54 oder 55, **dadurch gekennzeichnet, daß** die Wellenleiterstruktur (834, 934) durch Dotierung das Wandmaterial bildender Bereiche in einem mit dem frequenzverdoppelnden Mediums identischen Material gebildet ist.

57. Vorrichtung nach einem der Ansprüche 46 bis 55, **dadurch gekennzeichnet, daß** die Wellenleiterstruktur (834, 934) durch auf einem Substrat (838, 938) aufgetragene und das Wandmaterial umfassende Schichten (842, 844, 850) gebildet ist.

58. Vorrichtung nach einem der Ansprüche 46 bis 57, **dadurch gekennzeichnet, daß** das frequenzverdoppelnde Medium (836, 936) durch eine auf einem Substrat (838, 938) aufgetragene Schicht (850) gebildet ist.

59. Vorrichtung nach Anspruch 58, **dadurch gekennzeichnet, daß** eine definierte Ausrichtung von kristallographischen Achsen des frequenzverdoppelnden Medium (836, 936) durch Ausrichtung des Substrats (838, 938) vorgegeben ist.

60. Vorrichtung nach einem der Ansprüche 47 bis 59, **dadurch gekennzeichnet, daß** das frequenzverdoppelnde Medium (836, 936) so ausgebildet und hinsichtlich seiner optischen Achse zum Wellenleiterkanal so ausgerichtet ist, daß eine unkritische Phasenanpassung zwischen der Strahlung und der verdoppelten Strahlung in Längsrichtung (854, 954) der Wellenleiterstruktur (834, 934) erfolgt.

61. Vorrichtung nach Anspruch 60, **dadurch gekennzeichnet, daß** das frequenzverdoppelnde Medium (836, 936) auf eine definierte Temperatur bringbar ist.

62. Vorrichtung nach einem der Ansprüche 47 bis 59 und 61,
**dadurch gekennzeichnet, daß** das frequenzverdoppelnde Medium (836') so ausgebildet und ausgerichtet ist, daß in Längsrichtung (854) der Wellenleiterstruktur (834) eine Quasiphasenanpassung erfolgt.

## Claims

1. Apparatus for generating an image in an image plane that is visible, in particular, for a human eye, comprising a radiation source (20) generating an image via an optical projection means (28, 128, 228, 328) by building up at least one row of image spots (38) during an image build-up cycle (12) by illuminating individual, adjacently located image spots (34) and periodically repeating the image build-up cycle, a row of light sources (16) comprising a plurality of semiconductor emitters (20) being provided for the illumination of the image spots (34) of the row of image spots (38), the optical projection means (28, 128, 228, 328) associating each exit spot (30) for the radiation (32) of each semiconductor emitter with at least one of the image spots (34), and the optical projection means (28, 128, 228, 328) simultaneously imaging the exit spots (30) of all the semiconductor emitters (20) of the row of light sources onto the image spots (34) associated therewith, **characterized in that** the optical projection means (28, 128, 228, 328) images adjacently located exit spots (30) of the row of light sources (16) onto a series of image spots designed as an image spot pattern (38R) having an image spot pattern spacing (BR) amounting each time to a specific multiple of the distance (A) between adjacently located image spots (34) of the row of image spots (38).

2. Apparatus as defined in claim 1, **characterized in that** the image spot pattern spacing (BR) is an integral multiple of the distance (A) between adjacently located image spots (34) of the row of image spots (38).

3. Apparatus as defined in claim 1 or 2, **characterized in that** the apparatus comprises an optical spreading means (70) imaging the distance between adjacently located exit spots (30) of the row of light sources (16) onto a pattern spacing (R) resulting in the image spot pattern spacing (BR) in the image following projection by the optical projection means (28, 128, 228, 328).

4. Apparatus as defined in claim 3, **characterized in that** the optical spreading means (70) enlarges the distance between adjacently located exit spots of the row of light sources to the pattern spacing (R).

5. Apparatus as defined in claim 3 or 4, **characterized in that** the optical spreading means (70) images the radiation (32) exiting from the exit spots (30) onto parallel beam bundles extending in the pattern spacing (R) relative to one another.

6. Apparatus as defined in any one of claims 3 to 5, **characterized in that** the optical spreading means (70) comprises a plurality of prism elements (82, 84), and that the prism elements (82, 84) generate beam bundles (32) exiting from the optical spreading means (70), and having the pattern spacing (R).

7. Apparatus as defined in any one of claims 3 to 6, **characterized in that** the optical spreading means (70) comprises a reflection grating (90) whose reflection surfaces (92) have the specific pattern spacing (R) in the direction of incidence (94) of the radiation (32) coming from the semiconductor emitters (20).

8. Apparatus as defined in claim 7, **characterized in that** the optical spreading means (70) comprises a light guide (74) for each of the exit spots (30), and that the radiation from the respective exit spots (30) of the semiconductor emitters (20) enters the light guides (74) at one end (76), and that the light guides (74) define with the other end (78) light guide exit spots (80) arranged in the predetermined pattern spacing (R).

9. Apparatus as defined in claim 8, **characterized in that** light guide paths (74) arranged on a substrate (72) are provided as light guides for the optical spreading means (70).

10. Apparatus as defined in any one of the preceding claims, **characterized in that** the optical projection means (28, 128, 228, 328) also associates different exit spots (30) with different image spots (34) of the row of image spots during the image build-up cycle.

11. Apparatus as defined in any one of the preceding claims, **characterized in that** the optical projection means (28, 128, 228, 328) associates the same exit spots (30) with the same image spots (34) of the row of image spots (38) during each image build-up cycle.

12. Apparatus as defined in any one of the preceding claims, **characterized in that** the number of semiconductor emitters (20) is smaller than the total number of image spots (34) of the row of image spots (38), and that the optical projection means (28, 128, 228, 328) images the exit spots onto various series of image spots (38S, 38R) of the row of image spots (38) at consecutive points of time during the image build-up cycle.

13. Apparatus as defined in any one of the preceding claims, **characterized in that** for generating the row of image spots (38) the optical projection means (28, 128, 228, 328) images the radiation (32) coming from the row of light sources (16) successively onto various series of image spots (38S, 38R) one after the other.

14. Apparatus as defined in claim 13, **characterized in that** the optical projection means (28, 128, 228, 328) comprises a beam deflecting element (28a) imaging the radiation (32) coming from the row of light sources (16) onto the consecutive series of image spots (38R).

15. Apparatus as defined in claim 14, **characterized in that** the beam deflecting element is a movable reflection element (28a).

16. Apparatus as defined in claim 15, **characterized in that** the reflection element (28a) is movable into defined angular positions imaging the radiation (32) coming from the row of light sources (16) onto a respective one of the series of image spots (38R).

17. Apparatus as defined in claim 16, **characterized in that** the beam deflecting element is formed by a mirror (28a) pivotable about an axis (28c).

18. Apparatus as defined in claim 17, **characterized in that** the mirror (28a) moves continuously during the image build-up cycle.

19. Apparatus as defined in claim 17, **characterized in that** the mirror (28a) passes through individual, defined positions during the image build-up cycle.

20. Apparatus as defined in any one of the preceding claims, **characterized in that** the optical projection means (28, 128, 228, 328) builds up the image from a plurality of adjacently located rows of image spots (38') during the image build-up cycle.

21. Apparatus as defined in claim 20, **characterized in that** the optical projection means (28, 128, 228, 328) generates the image spots (34) of one series of image spots (38S, 38R) in each row of image spots (38') and then generates the next series of image spots (38R) in each row of image spots (38').

22. Apparatus as defined in claim 20 or 21, **characterized in that** the optical projection means comprises a beam deflecting element (130) generating the series of image spots (38R) in the consecutive rows of image spots (38).

23. Apparatus as defined in claim 22, **characterized in that** the beam deflecting element is a movable reflection element (130).

24. Apparatus as defined in claim 23, **characterized in that** the reflection element (130) is movable into defined angular positions generating the series of image spots (38R) in each of the rows of image spots (38').

25. Apparatus as defined in any one of claims 14 to 24, **characterized in that** the beam deflecting element is formed by a polygonal mirror (130) rotating about an axis of rotation (132).

26. Apparatus as defined in claim 25, **characterized in that** the polygonal mirror (130) reflects the radiation coming from the row of light sources (16) with each polygonal surface (136) such that this radiation traverses the number of adjacently located rows of image spots by rotation in a predetermined angular range and then proceeds to the next polygonal surface (136).

27. Apparatus as defined in claim 25 or 26, **characterized in that** the polygonal mirror (130') has mirror surfaces (136') respectively inclined by a different angle in relation to a parallel line (133) to the axis of rotation (132) such that each mirror surface (136') generates a series of image spots (38R) in all the rows of image spots (38R) of the image.

28. Apparatus as defined in any one of claims 14 to 27, **characterized in that** the optical projection means (28) focuses the radiation from the semiconductor emitters (20) of the row of light sources (16) essentially onto the beam deflecting element (130).

29. Apparatus as defined in any one of the preceding claims, **characterized in that** the optical projection means (28, 128, 228, 328) generates image spots (34) having small distances between one another.

30. Apparatus as defined in claim 29, **characterized in that** the image spots (34) border essentially on one another.

31. Apparatus as defined in any one of the preceding claims, **characterized in that** the optical projection means (228, 328) combines the radiation (32R, 32G, 32B) of the three semiconductor emitters (20R, 20G, 20B) radiating at different wavelengths to form a beam bundle (32V).

32. Apparatus as defined in any one of the preceding claims, **characterized in that** the semiconductor emitters (20) emit the radiation (32) in the period of time between two consecutive control points of time (t₁, t₂ ...).

33. Apparatus as defined in claim 32, **characterized in that** the control points of time (t₁, t₂, ...) succeed one another at constant time intervals.

34. Apparatus as defined in claim 28 or 29, **characterized in that** the semiconductor emitters (20) emit the radiation (32) with a variably adjustable intensity.

35. Apparatus as defined in claim 34, **characterized in that** the semiconductor emitters (20) emit the radiation (32) with the adjusted intensity essentially unaltered between two control points of time (t₁, t₂, ...).

36. Apparatus as defined in claim 34 or 35, **characterized in that** the intensity of the radiation (32) of each semiconductor emitter (20) is adjusted at each control point of time (t₁, t₂, ...).

37. Apparatus as defined in one of claims 32 or 33, **characterized in that** the semiconductor emitters (20) emit between the control points of time (t₁, t₂, ...) either radiation (32) with a maximum intensity but a variably adjustable duration (Δt₁, △t₂, ...) or no radiation.

38. Apparatus as defined in claim 37, **characterized in that** an average intensity perceived by an observer is adjusted by modulating the duration (△At₁, △t₂, ...) of the emission of the radiation (32).

39. Apparatus as defined in claim 37 or 38, **characterized in that** the duration (△t₁, △t₂, ...) of the emission of the radiation (32) is adjusted at each control point of time (t₁, t₂, ...).

40. Apparatus as defined in any one of the preceding claims, **characterized in that** each image spot (34) is adapted to be illuminated by a single semiconductor emitter (20).

41. Apparatus as defined in any one of claims 1 to 39, **characterized in that** each image spot (34) is adapted to be illuminated by three semiconductor emitters (20R, 20G, 20B), each of said emitters emitting radiation (32R, 32G, 32B) at such a wavelength that white light is generated by superimposing the radiation from the three semiconductor emitters (20R, 20G, 20B).

42. Apparatus as defined in claim 41, **characterized in that** the three semiconductor emitters (20R, 20G, 20B) respectively illuminating one image spot (34) are adapted to be controlled simultaneously.

43. Apparatus as defined in any one of the preceding claims, **characterized in that** the row of light sources (16) has at least one row of semiconductor emitters (20) emitting radiation of the same wavelength.

44. Apparatus as defined in claim 43, **characterized in that** for illuminating the image spots (34) of one row of image spots (38) the corresponding row of light sources (16) comprises three rows (218, 220, 222) of semiconductor emitters (20R, 20G, 20B) extending parallel to one another, and the semiconductor emitters (20R, 20G, 20B) of each row emit radiation of essentially the same wavelength.

45. Apparatus as defined in any one of the preceding claims, **characterized in that** an intermediate store (50) is provided for the simultaneous control of several semiconductor emitters (20), the control parameters for simultaneously controlling the several semiconductor emitters (20) being read out in parallel from said intermediate store.

46. Apparatus as defined in any one of the preceding claims, **characterized in that** one of the semiconductor emitters (820, 920) comprises a semiconductor radiation source (826, 926) and a frequency doubler (832, 932) for the radiation emitted by the semiconductor radiation source.

47. Apparatus as defined in claim 46, **characterized in that** the frequency doubler (832, 932) comprises a waveguide structure (834, 934) guiding the radiation from each radiation source (826, 926) in a compressed manner with a power density of at least 10⁵W/cm² and a frequency doubling medium (836, 936) arranged in the waveguide structure (834, 934).

48. Apparatus as defined in claim 46 or 47, **characterized in that** the frequency doublers (832) directly follow the radiation sources (826).

49. Apparatus as defined in claim 46 or 47, **characterized in that** an optical means (930) focusing the radiation into the waveguide structure (934) is arranged between each radiation source (926) and each frequency doubler (932).

50. Apparatus as defined in any one of claims 46 to 49, **characterized in that** the radiation sources (826, 926) of a row of light sources (16) are arranged in a row, and the frequency doublers (832, 932) of the row of light sources (16) are likewise arranged in a row on the output side of the radiation sources (826, 926).

51. Apparatus as defined in any one of claims 46 to 50, **characterized in that** several of the radiation sources (826) are arranged on a common substrate (834).

52. Apparatus as defined in any one of claims 46 to 51, **characterized in that** several of the frequency doublers (832, 932) are arranged on a common substrate (838).

53. Apparatus as defined in any one of claims 46 to 52, **characterized in that** each waveguide structure (834, 934) of each frequency doubler (832, 932) is a "single mode" waveguide.

54. Apparatus as defined in any one of claims 46 to 53, **characterized in that** each waveguide structure (834, 934) is formed by a wall material surrounding the frequency doubling medium (836, 936) forming the waveguide core and having a lower refractive index than the waveguide core.

55. Apparatus as defined in claim 54, **characterized in that** the wall material is based on the same material as the frequency doubling medium (836, 936) and has a lower refractive index than this due to a different doping.

56. Apparatus as defined in claim 54 or 55, **characterized in that** the waveguide structure (834, 934) is formed by doping of regions forming the wall material in a material identical to the frequency doubling medium.

57. Apparatus as defined in any one of claims 46 to 55, **characterized in that** the waveguide structure (834, 934) is formed by layers (842, 844, 850) applied to a substrate (838, 938) and comprising the wall material.

58. Apparatus as defined in any one of claims 46 to 57, **characterized in that** the frequency doubling medium (836, 936) is formed by a layer (850) applied to a substrate (838, 938).

59. Apparatus as defined in claim 58, **characterized in that** a defined alignment of crystallographic axes of the frequency doubling medium (836, 936) is predetermined by alignment of the substrate (838, 938).

60. Apparatus as defined in any one of claims 47 to 59, **characterized in that** the frequency doubling medium (836, 936) is designed and with respect to its optical axis is aligned in relation to the waveguide channel such that an uncritical phase matching results between the radiation and the doubled radiation in longitudinal direction (854, 954) of the waveguide structure (834, 934).

61. Apparatus as defined in claim 60, **characterized in that** the frequency doubling medium (836, 936) is adapted to be brought to a defined temperature.

62. Apparatus as defined in any one of claims 47 to 59 and 61, **characterized in that** the frequency doubling medium (836') is designed and aligned such that a quasi-phase matching results in longitudinal direction (854) of the waveguide structure (834).

## Revendications

1. Dispositif pour produire une image, visible notamment pour un oeil humain, dans une surface d'image, comprenant une source de rayonnement (20), qui produit une image particulière d'un système optique de projection (28, 128, 228, 328) de telle sorte que pendant un cycle (12) de formation de l'image, ce système établit au moins une série d'images (38) par éclairement de différentes zones d'image juxtaposées (34) et répète périodiquement le cycle de formation de l'image, dans lequel pour l'éclairement des zones d'image (34) de la série d'images (38) il est prévu une rampe d'éclairement (16), qui comprend une multiplicité d'émetteurs à semiconducteurs (20), le système optique de projection (28, 128, 228, 328) associe chaque zone de sortie (30) pour le rayonnement (32) de chaque émetteur à semiconducteurs au moins l'une des zones d'image (34), et dans lequel le système optique de projection (28, 128, 228, 328) forme simultanément l'image des zones de sortie (100) de tous les émetteurs à semiconducteurs (20) de la rampe d'éclairement sur les zones d'image (34) qui leur sont associées,
**caractérisé en ce que** le système optique de projection (28, 128, 228, 328) forme l'image de zones de sortie juxtaposées (30) de la rampe d'éclairement (16) sur une série de zones d'image, formées en tant que réseau (38R) de zones d'image possédant un pas de réseau (BR) qui est égal respectivement à une multiple déterminé de la distance (A) entre des zones d'image juxtaposées (34) de la rangée (38) de l'image.

2. Dispositif selon la revendication 1, **caractérisé en ce que** le pas (BR) du réseau de zones d'image est égal à un multiple entier de la distance (A) de zones d'image juxtaposées (34) de la rangée (38) d'image

3. Dispositif selon la revendication 1 ou 2, **caractérisé en ce que** le dispositif comprend un système optique d'agrandissement (70) qui forme l'image de la distance entre deux zones de sortie juxtaposées (30) de la rampe d'éclairement (16) sur un pas (R) du réseau, qui fournit le pas (BR) du réseau de zones d'image, après formation de l'image par le système optique de projection (28, 128, 228, 328) dans l'image.

4. Dispositif selon la revendication 3, **caractérisé en ce que** le système optique d'agrandissement (70) augmente la distance entre des zones de sortie juxtaposées de la rampe d'éclairement pour l'amener à la valeur du pas (R) du réseau.

5. Dispositif selon la revendication 3 ou 4, **caractérisé en ce que** l'optique d'agrandissement (70) forme l'image du rayonnement (32), qui sort par les zones de sortie (30), sous la forme de faisceaux de rayonnement parallèles qui sont séparés les uns des autres du pas (R) du réseau.

6. Dispositif selon l'une des revendications 3 à 5, **caractérisé en ce que** le système optique d'agrandissement (70) comporte plusieurs éléments de prismes (82, 84) et que les éléments de prismes (82, 84) produisent des faisceaux de rayonnement (32), qui sortent du dispositif optique d'agrandissement (70) et possèdent le pas (R) du réseau.

7. Dispositif selon l'une des revendications 3 à 6, **caractérisé en ce que** le dispositif optique d'agrandissement (70) comprend un réseau réfléchissant (90), dont les surfaces réfléchissantes (92) possèdent le pas de réseau déterminé (R), dans la direction d'incidence (94) du rayonnement (32) qui est délivré par les émetteurs à semiconducteurs (20).

8. Dispositif selon la revendication 7, **caractérisé en ce que** le dispositif optique d'agrandissement (70) comporte un guide de lumière (74) pour chacune des zones de sortie (30) et que le rayonnement sortant des zones respectives de sortie (30) des émetteurs à semiconducteurs (20) pénètre au niveau d'une extrémité (76) dans les guides de lumière (74), et que les guides de lumière (74) déterminent, par leur autre extrémité (78), des zones de sortie (80) des guides de lumière, qui sont disposées avec le pas de réseau prédéterminé (R).

9. Dispositif selon la revendication 8, **caractérisé en ce que** pour le dispositif optique d'agrandissement (70), on prévoit comme guides de lumière des voies (74) de guidage de la lumière disposées sur un substrat (72).

10. Dispositif selon l'une des revendications précédentes, **caractérisé en ce que** le système optique de projection (28, 128, 228, 328) associe également, pendant le cycle d'établissement de l'image, des zones différentes d'image (34) de la rangée de l'image à différentes zones de sortie (30).

11. Dispositif selon l'une des revendications précédentes, **caractérisé en ce que** le système optique de projection (28, 128, 228, 328) associe, pendant chaque cycle de formation de l'image, les mêmes zones de sortie (30) aux mêmes zones d'image (34) de la rangée (38) d'image.

12. Dispositif selon l'une des revendications précédentes, **caractérisé en ce que** le nombre des émetteurs à semiconducteurs (20) est inférieur au nombre total des zones d'image (34) de la rangée (38) d'image et que le système optique de projection (28, 128, 228, 328) forme l'image des zones de sortie pendant le cycle d'établissement de l'image à des instants successifs à différentes séries de zones d'image (38T, 38R) de la rangée (38) d'image.

13. Dispositif selon l'une des revendications précédentes, **caractérisé en ce que** pour la production de la série d'images (38), le système optique de projection (28, 128, 228, 328) forme successivement l'image du rayonnement (32) arrivant de la rampe d'éclairement (16), sur différentes séries (38R) de zones d'image.

14. Dispositif selon la revendication 13, **caractérisé en ce que** le système optique de projection (28, 128, 228, 328) comprend un élément (28a) qui dévie le rayonnement et qui forme l'image du rayonnement (32) qui arrive de la rampe d'éclairement (16), dans les séries successives (38R) de zones d'image.

15. Dispositif selon la revendication 14, **caractérisé en ce que** l'élément, qui dévie le rayonnement, est un élément réfléchissant déplaçable (28a).

16. Dispositif selon la revendication 15, **caractérisé en ce que** l'élément réfléchissant (28a) peut être déplacé pour être amené dans des positions angulaires définies, qui forment l'image du rayonnement (32) arrivant de la rampe d'éclairement (16), respectivement dans l'une des séries (38R) de zones d'image.

17. Dispositif selon la revendication 16, **caractérisé en ce que** l'élément, qui dévie le rayonnement, est formé par un miroir (28a) qui peut pivoter autour d'un axe (28c).

18. Dispositif selon la revendication 17, **caractérisé en ce que** le miroir (28a) se déplace continûment pendant le cycle d'établissement de l'image.

19. Dispositif selon la revendication 17, **caractérisé en ce que** le miroir (28a) passe par différentes positions définies, pendant le cycle d'établissement de l'image.

20. Dispositif selon l'une des revendications précédentes, **caractérisé en ce que** pendant le cycle d'établissement de l'image le système optique de projection (28, 128, 228, 328) établit l'image à partir de plusieurs rangées d'images juxtaposées (38').

21. Dispositif selon la revendication 20, **caractérisé en ce que** le système optique de projection (28, 128, 228, 328) produit des zones d'image (34) d'une série de zones d'image (38S, 38R) dans chaque rangée de l'image (38) et produit ensuite la série suivante de zones d'image (38R) dans chaque rangée (38') d'image.

22. Dispositif selon la revendication 20 ou 21, **caractérisé en ce que** le système optique de projection comprend un élément (130) qui dévie le rayonnement et produit les séries (38R) de zones d'image, dans les rangées successives (38) d'image.

23. Dispositif selon la revendication 22, **caractérisé en ce que** l'élément, qui dévie le rayonnement, est un élément réfléchissant déplaçable (130).

24. Dispositif selon la revendication 23, **caractérisé en ce que** l'élément réfléchissant (130) est déplaçable pour venir dans des positions angulaires définies, qui produisent les séries (38R) de zones d'image dans chacune des rangées (38') d'image.

25. Dispositif selon l'une des revendications 14 à 24, **caractérisé en ce que** l'élément, qui dévie le rayonnement, est formé par un miroir polygonal (130), qui tourne autour d'un axe de rotation (132).

26. Dispositif selon la revendication 25, **caractérisé en ce que** le miroir polygonal (33) réfléchit, par une surface polygonale (136), le rayonnement qui arrive de la rampe d'éclairement (16) de telle sorte que ce rayonnement traverse la multiplicité des rangées d'images juxtaposées, par rotation sur une plage angulaire déterminée, puis se propage en direction de la surface polygonale (136) immédiatement suivante.

27. Dispositif selon la revendication 25 ou 26, **caractérisé en ce que** le miroir polygonal (33) comporte des surfaces (136'), qui sont inclinées d'un angle différent respectivement par rapport à une parallèle (133) de l'axe de rotation (132) de sorte que chaque surface (136') du miroir comporte une série de zones (38R) de zones d'image dans toutes les rangées (38) de l'image.

28. Dispositif selon l'une des revendications 18 à 27, **caractérisé en ce que** le système optique de projection (28) focalise le rayonnement des émetteurs à semiconducteurs (21) de la rampe d'éclairement (16) essentiellement sur l'élément (130) qui dévie le rayonnement.

29. Dispositif selon l'une des revendications précédentes, **caractérisé en ce que** le système optique de projection (28, 128, 228, 328) produit des zones d'image (34) qui sont séparées les unes des autres par de faibles distances.

30. Dispositif selon la revendication 29, **caractérisé en ce que** les zones d'image (34) sont essentiellement contiguës.

31. Dispositif selon l'une des revendications précédentes, **caractérisé en ce que** le système optique de projection (228, 328) réunit le rayonnement (32R, 32G, 32B) des trois émetteurs à semiconducteurs (20R, 20G, 20B), qui émettent avec les longueurs d'onde différentes, pour former un faisceau de rayonnement (32V).

32. Dispositif selon l'une des revendications précédentes, **caractérisé en ce que** les émetteurs à semiconducteurs (20) émettent le rayonnement (32) pendant un intervalle de temps présent entre deux instants de commande successifs (t₁, t₂, ...).

33. Dispositif selon la revendication 32, **caractérisé en ce que** les instants de commande (t₁, t₂, ...) se succèdent à des intervalles de temps constants.

34. Dispositif selon la revendication 28 ou 29, **caractérisé en ce que** les émetteurs à semiconducteurs (20) émettent un rayonnement (32) avec une intensité réglable de façon variable.

35. Dispositif selon la revendication 34, **caractérisé en ce que** les émetteurs à semiconducteurs (20) émettent d'une manière essentiellement non modifiée, entre deux instants de commande (t₁, t₂, ...), le rayonnement (32) avec l'intensité réglée.

36. Dispositif selon la revendication 34 ou 35, **caractérisé en ce que** le réglage de l'intensité du rayonnement (32) de chaque émetteur à semiconducteurs (20) s'effectue à chaque instant de commande (t₁, t₂, ...).

37. Dispositif selon l'une des revendications 32 ou 33, **caractérisé en ce que** les émetteurs à semiconducteurs (20) émettent entre les instants de commande (t₁, t₂, ...) un rayonnement (32) ayant l'intensité maximale, mais présentant une durée réglable de façon variable (Δt₁, Δt₂, ...) ou n'émettent aucun rayonnement.

38. Dispositif selon la revendication 37, **caractérisé en ce que** le réglage d'une intensité moyenne, décidée par un observateur, est réalisé par modulation de la durée (△t₁, △t₂, ...), de l'émission de rayonnement (32).

39. Dispositif selon la revendication 37 ou 38, **caractérisé en ce que** le réglage de la durée (△t₁, △t₂, ...) de l'émission de rayonnement (32) s'effectue à chaque instant de commande (t₁, t₂, ...).

40. Dispositif selon l'une des revendications précédentes, **caractérisé en ce que** chaque zone d'image (34) peut être éclairée par un seul émetteur à semiconducteurs (20).

41. Dispositif selon l'une des revendications 1 à 39, **caractérisé en ce que** chaque zone (34) de l'image peut être éclairée par deux émetteurs à semiconducteurs (20R, 20G, 20B), dont chacun émet un rayonnement (32R, 32G, 32B) avec une longueur d'onde telle que par superposition du rayonnement du troisième émetteur à semiconducteurs (20R, 20G, 20B), on peut obtenir une lumière blanche.

42. Dispositif selon la revendication 41, **caractérisé en ce que** les trois émetteurs à semiconducteurs (20R, 20G, 20B), qui éclairent chacun une zone d'image (34), peuvent être commandés simultanément.

43. Dispositif selon l'une des revendications précédentes, **caractérisé en ce que** la rampe d'éclairement (16) comporte au moins une série d'émetteurs à semiconducteurs (20), qui émettent des rayonnements de même longueur d'onde.

44. Dispositif selon la revendication 43,
**caractérisé en ce que** pour l'éclairement des zones (34) d'image d'une rangée (38) d'image, la rampe d'éclairement correspondante (16) comprend trois rangées (218, 220, 222) qui sont parallèles entre elles, d'émetteurs à semiconducteurs, les émetteurs à semiconducteurs (20R, 20G, 20B) de chaque série émettent des rayonnements possédant essentiellement les mêmes longueurs d'onde.

45. Dispositif selon l'une des revendications précédentes, **caractérisé en ce que** pour la commande simultanée de plusieurs émetteurs à semiconducteurs (20) il est prévu une mémoire intermédiaire (50), à partir de laquelle les paramètres de commande peuvent être lues en parallèle pour la commande simultanée des différents émetteurs à semiconducteurs (20).

46. Dispositif selon l'une des revendications précédentes, **caractérisé en ce que** l'un des émetteurs à semiconducteurs (820, 920) comprend une source de rayonnement à semiconducteurs (826, 926) et un doubleur de fréquence (832, 932) pour le rayonnement émis par la source de rayonnement à semiconducteurs.

47. Dispositif selon la revendication 46,
**caractérisé en ce que** le doubleur de fréquence (832, 932) comprend une structure de guide d'ondes (834, 934), qui guide avec compression le rayonnement de chaque source de rayonnement (826, 926) possédant une densité de puissance égale à au moins 5 x 10⁵ W/cm², et un milieu (836, 936), qui est disposé dans la structure de guide d'ondes (834, 934) et qui réalise un doublement de la fréquence.

48. Dispositif selon la revendication 46 ou 47, **caractérisé en ce que** les doubleurs de fréquence (832) se raccordent directement aux sources de rayonnement (826).

49. Dispositif selon la revendication 46 ou 47, **caractérisé en ce qu'**un système optique (930) qui focalise le rayonnement dans la structure de guide d'ondes (934), est disposé entre chaque source de rayonnement (936) et chaque doubleur de fréquence (932).

50. Dispositif selon l'une des revendications 46 à 49, **caractérisé en ce que** les sources de rayonnement (926, 936) d'une rampe d'éclairement (16) sont disposées suivant une rangée et que les doubleurs de fréquence (832, 932) de la rampe d'éclairement (16) sont disposés sur le côté sortie des sources de rayonnement (826, 926), également suivant une rangée.

51. Dispositif selon l'une des revendications 46 à 50, **caractérisé en ce que** plusieurs des sources de rayonnement (826) sont disposées sur un substrat commun (834).

52. Dispositif selon l'une des revendications 46 à 51, **caractérisé en ce que** plusieurs des doubleurs de fréquence (832, 932) sont disposés sur un substrat commun (838).

53. Dispositif selon l'une des revendications 46 à 52, **caractérisé en ce que** chaque structure de guide d'ondes (834, 934) de chaque doubleur de fréquence (832, 932) est un guide d'ondes "monomode".

54. Dispositif selon l'une des revendications 46 à 53, **caractérisé en ce que** chaque structure de guide d'ondes (834, 934) est formée par un matériau de paroi, qui entoure un milieu (836, 936) qui forme le coeur du guide d'ondes et double la fréquence, et qui possède un indice de réfraction inférieure à celui du coeur du guide d'ondes.

55. Dispositif selon la revendication 54, **caractérisé en ce que** le matériau de la paroi est basée sur le même matériau que le milieu (836, 936) de doublement de la fréquence et possède, sur la base d'un dopage différent, un indice de réfraction inférieur à celui de ce milieu.

56. Dispositif selon la revendication 54 ou 55, **caractérisé en ce que** la structure de guide d'ondes (834, 934) est formée par dopage de zones formant le matériau de parties réalisées en un matériau identique au milieu qui double la fréquence.

57. Dispositif selon l'une des revendications 46 à 55, **caractérisé en ce que** la structure de guide d'ondes (834, 934) est formée par des couches (842, 844, 852), qui sont portées par un substrat (838, 938) et englobent le matériau de paroi.

58. Dispositif selon l'une des revendications 48 à 57, **caractérisé en ce que** le milieu (836, 936) qui double la fréquence est formé par une couche (805) supporté par un substrat (839, 939).

59. Dispositif selon la revendication 58, **caractérisé par** un alignement défini d'axes cristallographiques du milieu (835, 936), qui double la fréquence, par alignement du substrat (838, 938).

60. Dispositif selon l'une des revendications 47 à 59, **caractérisé en ce que** le milieu (836, 936), qui double la fréquence, est agencé et son axe optique est aligné par rapport au canal du guide d'ondes de telle sorte qu'il existe une adaptation de phase non critique entre le rayonnement et le rayonnement doublé dans la direction longitudinale (854, 954) de la structure de guide d'ondes (834, 934).

61. Dispositif selon la revendication 60, **caractérisé en ce que** le milieu (836, 936) qui double la fréquence peut être amené à une température définie.

62. Dispositif selon l'une des revendications 47 à 59 et 61, **caractérisé en ce que** le milieu (836), qui double la fréquence, est agencé et aligné de telle sorte qu'il se produit effectivement une adaptation de phase dans la direction longitudinale (854) de la structure de guide d'ondes (834).
